(19) Europäisches Patentamt / European Patent Office / Office européen des brevets

(11) **EP 2 966 477 B1**

(12) **EUROPEAN PATENT SPECIFICATION**

(45) Date of publication and mention of the grant of the patent:
**11.08.2021 Bulletin 2021/32**

(51) Int Cl.:
*G01S 19/43* (2010.01)  *G01S 19/44* (2010.01)
*G01S 19/47* (2010.01)  *G01S 19/54* (2010.01)
*G01S 19/55* (2010.01)  *G01S 19/07* (2010.01)

(21) Application number: **14176425.8**

(22) Date of filing: **09.07.2014**

(54) **METHOD FOR DETERMINING THE POSITION AND ATTITUDE OF A MOVING OBJECT USING LOW-COST RECEIVERS**

VERFAHREN ZUR BESTIMMUNG DER POSITION UND STELLUNG EINES BEWEGLICHEN OBJEKTS MITHILFE VON KOSTENGÜNSTIGEN EMPFÄNGERN

PROCÉDÉ POUR DÉTERMINER LA POSITION ET L'ATTITUDE D'UN OBJET EN MOUVEMENT À L'AIDE DE RÉCEPTEURS À BAS COÛT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.01.2016 Bulletin 2016/02**

(73) Proprietor: **ANavS GmbH**
**80686 München (DE)**

(72) Inventors:
- **HENKEL, Patrick**
  **82275 Emmering (DE)**
- **BERTHOLD, Philipp**
  **85276 Pfaffenhofen and der Ilm (DE)**

(56) References cited:
**EP-A1- 2 624 013**

- **DENNIS ODIJK ET AL: "Single-Frequency Integer Ambiguity Resolution Enabled GPS Precise Point Positioning", JOURNAL OF SURVEYING ENGINEERING, vol. 138, no. 4, 1 November 2012 (2012-11-01), pages 193-202, XP055160343, ISSN: 0733-9453, DOI: 10.1061/(ASCE)SU.1943-5428.0000085**
- **ZHIBO WEN ET AL: "Reliable estimation of phase biases of GPS satellites with a local reference network", ELMAR, 2011 PROCEEDINGS, IEEE, 14 September 2011 (2011-09-14), pages 321-324, XP031976473, ISBN: 978-1-61284-949-2**
- **None**

**Description**

The invention relates a method for determining the position of a moving object, the method comprising:

- performing code and phase measurements on satellite signals of a global satellite navigation system at a single carrier frequency by means of at least two object receivers associated with the moving object,
- determining the current position of the moving object based on the code and phase measurements using satellite-satellite single differences of the code and phase measurements and using an estimation of at least one absolute phase ambiguity.

The invention further relates to an apparatus arranged for performing the method.

The autonomous driving of vehicles places high requirements on the accuracy, reliability and availability of the position and attitude information.

Both Precise Point Positioning (PPP) and attitude determination have received a lot of attention recently.

One approach in literature is the tight coupling of GNSS and INS for position and attitude determination [1] [2]. The coupling is attractive as both sensors are complementary, i.e. GNSS is providing an unbiased absolute position and attitude information, while INS is providing high-rate angular rate and acceleration measurements which are robust to the environment.

However, current methods for tight coupling do not focus on PPP and are not suited for low-cost mass-market GNSS receivers. The lack of a precise synchronization, code multipath of several tens of meters, and frequent half and full cycle slips (that might affect multiple satellites simultaneously) have to be taken into account. The phase noise of mass-market GNSS receivers is yet in the order of a few millimeters such that a position accuracy comparable to geodetic receivers can still be obtained if the particular error sources of mass-market GNSS receivers are properly addressed.

Recent work on satellite bias determination for PPP used a two step procedure (see Gabor and Nerem [3] and Laurichesse et al [4]): First, fractional widelane biases are derived from the geometry-free, ionosphere-free Melbourne Wübbena combination to enable widelane integer ambiguity resolution. Subsequently, receiver and satellite clock offsets, satellite phase biases, tropospheric zenith delays, station coordinate corrections, satellite orbit corrections and carrier phase integer ambiguities are derived in a Kalman filter using a network of GNSS receivers. As the ionosphere-free combination and previously resolved widelane ambiguities are used at this step, narrowlane ambiguities have to be resolved. Laurichesse et al. analyzed the stability of the obtained satellite phase biases and observed that these biases can be assumed constant on a daily basis but might vary by up to 2 narrowlane cycles over a year.

Zhang, Teunissen and Odijk [5] estimated residual ionospheric errors, tropospheric zenith delays, satellite clock offsets, satellite phase biases (lumped with absolute ambiguities of one reference station) and double difference integer ambiguities in a Kalman filter with a regional network of dual-frequency GNSS receivers. They observed very stable satellite phase bias estimates with a variation of less than 0.1 cycles over 24 h. The obtained corrections were used for PPP/RTK. The absolute position was determined with an uncertainty of 1.3 cm, 0.9 cm and 5.0 cm in North, East and Up-direction.

Odijk, Teunissen and Zhang [6] considered a regional network of geodetic dual-frequency GNSS receivers. They first resolved the double difference integer ambiguities and subsequently estimated the satellite clock offsets, satellite phase biases and interpolated ionospheric delays. A hypothesis testing was performed for analyzing the stability of the phase biases. The satellite phase bias times series per arc and the respective variances were used to conclude that the biases are stable. However, the temporal variation of satellite phase biases is hardly visible as figures have a range of 10 m on the y-axis, and the hypothesis testing relies on the correctness of the covariance matrix, which might not be the case. Odijk et al. also verified their corrections, i.e. the absolute position and ambiguities were determined for a low-cost receiver using the previously determined satellite clocks, phase biases and interpolated ionospheric corrections. Odijk distinguishes between two types of PPP: a "standard" PPP using ionospheric corrections from global ionospheric maps and an improved PPP/RTK using a dense regional CORS network to generate more precise ionospheric corrections with Kriging interpolation. For the latter one, a positioning accuracy of a few millimeters was obtained for low-cost u-blox receivers. This accuracy was achieved under ideal conditions, i.e. code multipath was negligible and the measurements were taken in the solar minimum with low ionospheric variations (Oct. 2010). It shall also be noted that a low-cost GNSS receiver was only used for PPP but not for estimation of the satellite phase bias estimates.

Odijk, Teunissen and Khodabandeh further improved the PPP accuracy in [7] by describing the stochastic nature of the network corrections by a covariance matrix and, by using this covariance matrix for modeling the uncertainty of the corrected measurements. A closed form expression is provided for the covariance matrix. The benefit of the improved measurement covariance matrix was analyzed with low-cost u-blox receivers: The time for ambiguity resolution was reduced to 4 minutes and a position accuracy of 0.25 m, 0.19 m and 0.39 m was achieved for PPP in East, North and Up direction, and of 5.6 mm, 7.1 mm and 20 mm for PPP-RTK respectively. It has to be noted that these accuracies were again achieved under ideal conditions, i.e. negligible code multipath, minimum solar activity and no movement, which makes cycle slip detection easy.

Wen et al. additionally included a subset of code multipath delays in the state vector to improve the PPP accuracy. The method was verified with measurements from a few IGS stations. The position error was reduced by a factor of 2 .

Attitude determination has also received a lot of attention. Teunissen derived the integer least-squares estimation with a baseline length constraint in [9] and [10]. The orthogonal decomposition of the sum of squared errors was used as a starting point for the derivation of the optimal estimator. Unfortunately, an a priori information solely on the baseline length is not sufficient to perform single epoch ambiguity resolution with low-cost GNSS receivers in multipath environments as two out of three receiver coordinates are not sufficiently constrained.

The patent document EP2624013 A1 (7 August 2013) by ANavS GmbH is also a representation of the prior art. Henkel and Günther suggested to use a priori information on both the baseline length and attitude in [11]. The a priori information was included as soft constraints in the integer least-squares estimation. Soft constraints have the advantage of enabling a more reliable ambiguity fixing and being robust over errors in the a priori information, which is not the case for hard constraints.

Proceeding from this related art, the present invention seeks to provide method and an apparatus for determining the position and preferably also the attitude of a moving object using simple low-cost receivers.

This object is achieved by a method having the features of the independent claim. Advantageous embodiments and refinements are specified in claims dependent thereon.

In the method, satellite biases of satellite-satellite single differences of the phase measurements are retrieved from a network of static network receivers, Doppler measurements are performed on the satellite signal by at least one of the object receivers, and a kinematic sensor associated with the moving object is used for generating kinematic measurements on the motion of the moving object. The satellite-satellite single differences of the phase measurements are then corrected for satellite biases, and the satellite-satellite single differences of the code measurements, the satellite-satellite single differences of the corrected phase measurement, satellite-satellite differences of the Doppler measurements and the kinematic measurements are synchronized and used as an input for a recursive state estimator, that estimates the position and attitude of the moving object. By using this method for low-cost receivers the position and attitude of a moving object can be determined with high accuracy and reliability.

It should be noted that the term bias as used herein refers to systematic measurement errors that are primarily caused by the signal processing within the devices used for performing the method. The term ambiguity further refers to the phase ambiguity of phase measurements. Absolute phase ambiguities refers to ambiguities associated with measurements performed by a single receiver and consequently also include satellite-satellite single differences of such measurements, whereas relative ambiguities refer to ambiguities of double difference measurements. Absolute ambiguities can include satellite biases and can thus be real or integer valued. Since the satellite biases are cancelled in double difference measurements, relative ambiguities are integer valued. The term recursive state estimator refers to any kind of Kalman filter or other filters having the same functionality.

The satellite biases can be determined by a network of network receivers, which perform code and phase measurements on the satellite signals of the global satellite navigation system at a single carrier frequency. The code and phase measurements are corrected for the movement of the network receiver and the satellite within the time of the difference between the clock offsets of the network receivers and by using the corrected code measurements and the corrected phase measurements as input for a network recursive state estimator, that estimates the satellite biases. The estimation of the absolute satellite phase biases has the advantage that it enables an absolute carrier phase integer ambiguity resolution with low-cost mass-market GNSS receivers. The ambiguity resolution thus allows a high-precision absolute position determination.

Since measurements taken by low-cost receivers suffer from frequent cycle slips, the phase measurements are corrected for cycle slips using triple difference phase measurements of the network receivers. Cycle slips are integer multiples of the wavelength and thus, significantly, larger than the phase noise. Therefore, a correction of the cycle slips enables a position accuracy, which is only limited by the phase noise of a centimeter.

In one specific embodiment, the state vector of the network recursive state estimator comprises the absolute position of a selected network receiver, the relative positions between the selected network receiver and all other network receivers, the absolute phase ambiguities of the selected network receiver lumped with the satellite biases, the double difference phase ambiguities with respect to other network receivers, the code multipaths of the network receivers, the vertical ionospheric delays and the rates of vertical ionospheric delays. The advantage of estimating these state parameters including the vertical ionospheric delay is that there is no need to track the signals on a second or third frequency. Thus, low-cost mass-market single frequency receivers are completely sufficient and there is no need to use costly geodetic multi-frequency GNSS receivers.

In another embodiment, the real valued double difference phase ambiguities are fixed, all other parameters are re-adjusted and the satellite biases are determined as difference between the real-valued absolute phase ambiguities and their nearest integer numbers. Ambiguity fixing enables a much higher accuracy as the number of unknowns is reduced.

Before the object starts moving, the object receivers and the kinematic sensor are synchronized, biases of the kinematic sensor are determined and a recursive state estimator is used to estimate the relative position between object receivers as well as code multipaths of the object receivers and double difference integer ambiguities of phase measurements performed by the object receivers for obtaining reliable parameters for synchronizing the measurements and for initializing the iterative state estimator.

The position and the attitude of the object can be determined taking into account a priori information on the respective length of the baseline between the object receivers. The use of a priori information on the baseline enables a more reliable ambiguity fixing since the a priori information constrains the search space.

The kinematic sensor usually provides measurements on accelerations as well as measurements on angular rates of the baseline between a selected object receiver and another object receiver. Kinematic sensors (e.g. inertial sensors) are robust against GNSS signal outages and code multipath and, therefore, improve the reliability of the position and attitude solution. Moreover, kinematic sensors typically provide measurements with a higher data rate than GNSS receivers. The kinematic measurements also show a very low noise level and enable the direct observation of the acceleration.

In a further embodiment, the state vector of the recursive state estimator comprises a first set updated by the code, phase and Doppler measurements performed by the object receivers and a second set updated by the kinematic measurements. The coupling of the code, phase and Doppler measurements with the kinematic measurements combines the complementary advantages of both sensors.

The first set may comprise the position and the velocity of the selected object receiver, an absolute phase ambiguity of the selected object receiver, a double difference phase ambiguity with respect to the selected object receiver and the other object receiver as well as code multipath offsets of code measurements that are performed on the satellite signals by the object receivers. The estimation of this first set of state parameters enables an unbiased position determination. It has not yet been feasible so far since the code multipath was not yet considered as a state parameter.

The second set comprises the position, the velocity and the acceleration of the selected object receiver as well as attitude angles of the baseline, the angular rates, and biases of the kinematic measurements. The estimation of this second set of state parameters with kinematic measurements enables an estimation of the position with a much higher rate.

The synchronization between the phase and code measurements and the kinematic measurements can be performed by using a synchronization signal derived from a local clock contained in one of the object receivers.

In one embodiment, the synchronization signal is transmitted via a data bus or a separate line for the synchronization signal. The transmission of the synchronization signal via a data bus or a separate line enables a higher robustness and lower latency than other transmission media (e.g. mobile networks).

In another embodiment, the synchronization signal is a free running synchronization signal while the receiver, that generates the synchronization signal, receives less than four satellite signals, whereas the synchronization signal is locked to a time signal that is determined by least-squares estimation using pseudorange measurements from at least four satellites. The advantage of this synchronization is that it can always be performed, i.e. there is no need for a continuous GNSS signal reception.

An apparatus for performing the method results in sensor fusion for precise absolute position and attitude determination with sensor synchronization. This apparatus can be realized with low-cost mass-market hardware.

Further advantages and properties of the present invention are disclosed in the following description, in which exemplary embodiments of the present invention are explained in detail based on the drawings:

Figure 1    is a view of a satellite navigation system;

Figure 2    is a flow diagram of a method for determining the position and the attitude of a moving object using low-cost receiver;

Figure 3    is a flow diagram illustrating the determination of satellites biases using a network of stationary low cost receivers;

Figure 4    is a flow diagram illustrating the initialisation of a coupling between measurements on the satellites signals and measurements on a kinematic sensor;

Figure 5    is a flow diagramm illustrating the coupling between measurements on the satellites signals and measurements on a kinematic sensor;

Figure 6    is diagram depicting the estimates of ionospheric delays;

Figure 7    is a diagram depicting carrier phase residuals of ionospheric delay estimation;

Figure 8    shows an aerial view of a vehicles track during a test drive;

Figure 9    shows another aerial view of a vehicles during a test drive;

Figure 10   is a diagram showing the speed of the vehicle in eastern direction;

Figure 11   is a diagram showing the heading estimation with tight coupling in comparison with a reference solution;

Figure 12    is a diagram showing the difference between the heading estimation and the reference solution;

Figure 13    is a diagram containing the cumulative distribution of the heading error;

Figure 14    is a diagram depicting the rate of heading estimate in comparision with a reference solution;

Figure 15    illustrates the image registration of images taken with a local camera with satellite images or aerial images for improving the accuracy of position and/or attitude determination;

Figure 16    gives an overview on a bus system with sychronized sensors;

Figure 17    shows a timing diagram of a synchronisation signal;

Figure 18    shows another timing diagram of a synchronisation signal;

Figure 19    is a block diagram of a clock module for generating synchronisation signals;

Figure 20    is a diagram depicting the temporal development of clock error for various correction techniques;

Figure 21    is a block diagram of a sensor network with dedicated synchronisation lines; and

Figure 22    is a block diagram of a sensor network with a single shared data bus.

## 1. Overview

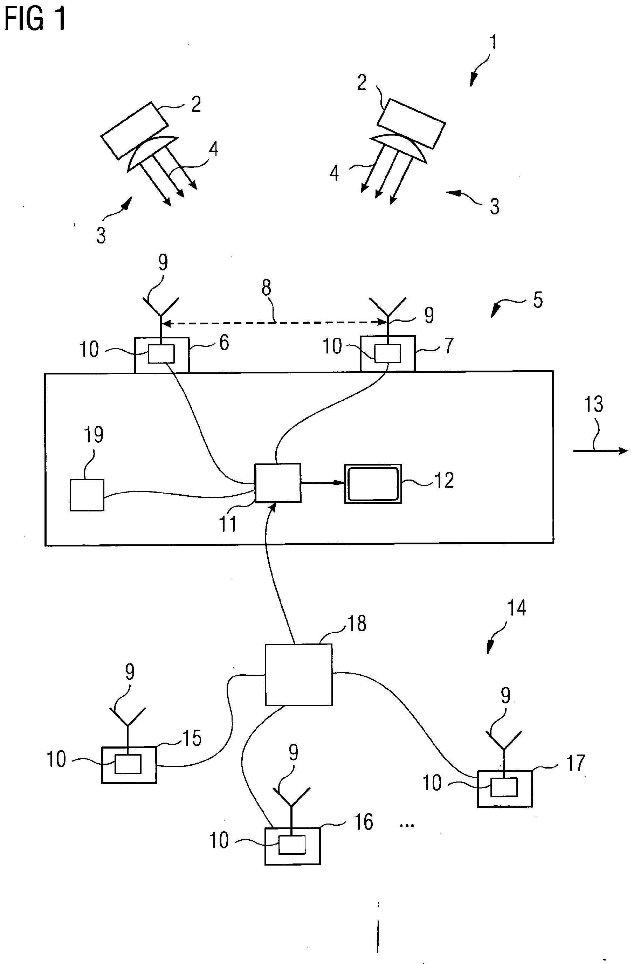

Figure 1 shows a Global Navigation Satellite System (= GNSS) 1, which comprises satellites 2, which are orbiting around the earth and emit satellite signals 3, which are modulated on a number of carrier signals 4.

For determining the position and the attitude of a moving object 5, a first object receiver 6 and a second object receiver 7 are attached to the object 5. The object 5 may be a vehicle moving on the surface of the earth such as a road vehicle or a ship or an airborne vehicle, such as an airplane. It should be noted that the object 5 may also be composed of a number of linked entities such as freight suspended from a crane or helicopter, wherein one of the receivers is attached to the freight and the other receiver is attached to the crane or helicopter.

The object receivers 6 and 7 define a baseline 8, which extend between both object receivers 6 and 7, in particular between antennas 9 of the object receivers 6 and 7. It should be noted, that the object 5 may also be provided with more than two object receivers 6 and 7. Then each pair of object receivers extends a separate baseline. To have more than one baseline 8 can be advantageous for determining the complete orientation of the object 5 in space. The complete orientation of the object 5 in space is also called attitude of the object 5.

The object receivers 6 and 7 are preferably so called low-cost receivers that receive and measure satellite signal 4 at the frequency of only one of the carrier signals 4. The navigation signals received by the object receivers 6 and 7 are processed in signal processors 10. In particular, well known code measurements and carrier phase measurements are performed. The code and carrier phase measurement are provided to an evaluation unit 11, which uses the code and phase measurements for determining the position and attitude of the object 5, which moves in a moving direction 13. The results can be shown on a display 12 or be used otherwise for controlling the motion of the object 5.

In the embodiment shown in Figure 1, the baseline 8 is attached to the object 5 such, that the baseline 8 aligns with the moving direction 13, in which the object 5 is moving. Thus, the attitude of the baseline 8 projected on the earth surface equals the heading of the object 5. In other embodiments the baseline may be permanently or accidentally aligned at an angle with respect the moving direction 13. For instance, if the object is a ship or an airplane, the moving direction need not necessarily coincide with the attitude of the baseline 8.

Figure 1 further shows a network of 14 of network receivers 15, 16 and 17 that are connected to a central processing unit 18. As will be explained in detail later on, the network 14 is primarily used for determining satellite biases of the satellites 2. The network receivers 15, 16, and 17 are preferably also so called low-cost receivers.

It should further be noted that the object 5 is provided with a kinematic sensor 19. The kinematic sensor 19 is preferable an inertia sensor which measures accelerations of the object and angular rates of the attitude of the object 5. The kinematic sensor 19 generally includes an accelerometer and a gyroscope but may also include a camera, a LIDAR, an odometer or any other sensor that performs measurements on the motion of the object 5.

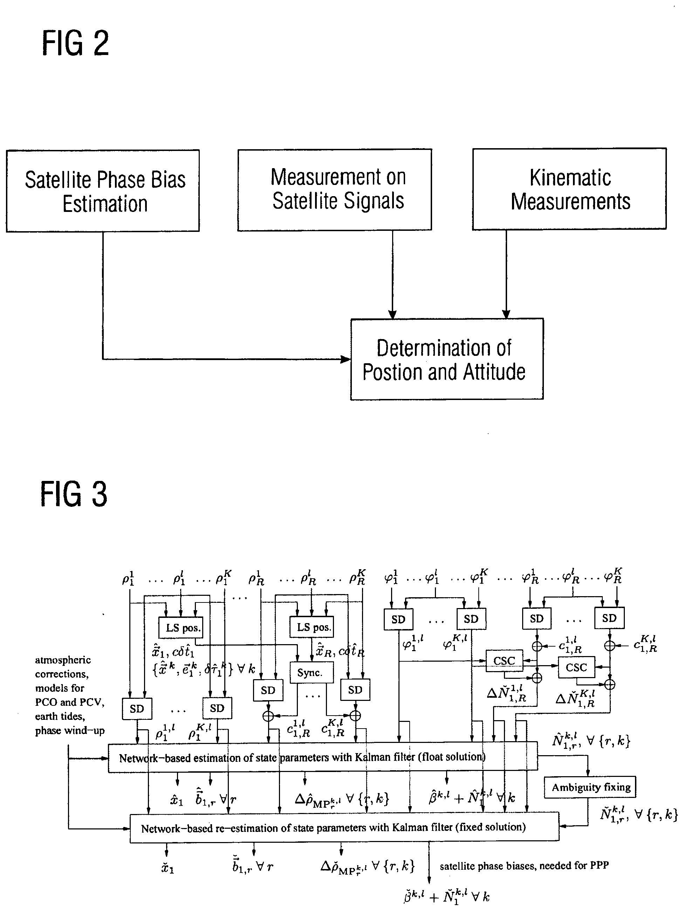

The determination of the position and attitude of the object 5 according to the method decribed herein is performed in two processing stages depicted in Figure 2. These processing stages result in a joint precise point positioning and attitude determination, which includes a tight coupling of the measurements from two low-cost GNSS receivers and an inertial sensor.

In a first stage, satellite phase biases are derived in a Kalman filter using the measurements of the network 14 of low-cost GNSS receivers. These network receivers are synchronized only with an accuracy of 1 ms to GPS system time and are affected by code multipath of several tens of meters. Therefore, the method includes a synchronization correction for each double difference ambiguity to restore its integer property and, include a code multipath offset parameter for every satellite in the state vector to improve the positioning accuracy.

In a second stage, a kinematic joint Precise Point Positioning (PPP) and attitude determination is performed with a tight coupling of the measurements from the two low-cost GNSS object receivers 6 and 7 and the kinematic sensor 19, which is perferably an inertial sensor (= IMU). The absolute position, velocity, acceleration, attitude angles, angular rates, single and double difference integer ambiguities, code multipath offsets for each satellite 2 and object receiver 6 and 7, and the biases of 3D accelerometer and gyroscope measurements are estimated using the satellite phase biases of the first step.

Figure 3 illustrates the Satellite phase bias estimation with the network 14 of network receivers 15 to 17 in more detail: First, the absolute receiver positions and clock offsets are determined by least-squares estimation (LS pos.) using pseudorange measurements only. The obtained receiver and satellite positions and clock offsets are then used to compute a synchronization correction (Sync) for each satellite-satellite single difference (SS-SD) measurement of each receiver (except the first one, which is serving as a reference). Subsequently, the absolute and relative receiver positions, code multipath, double difference ambiguities and satellite phase biases (lumped with SD ambiguities of first receiver) are determined with the network 14 of receivers in a Kalman filter. The obtained float solution is improved by a subsequent ambiguity fixing and re-adjustment of satellite phase biases.

An important part is the determination of a synchronization correction $c_{1,r}^{k,l}$ for each double difference. It requires a rough estimate of the clock offsets $\delta t_r$ of receivers $r \in \{1,2\}$, of the satellite positions $\vec{x}^k$ and of the line-of-sight vectors $\vec{e}_r^{\,k}$. The synchronization correction is needed for low-cost GNSS receivers as the satellite movement within the time difference of two receiver clock offsets can be of several meters. The double difference ambiguities are no longer integer valued if synchronization errors remain uncorrected. The pre-processing also includes the formation of satellite-satellite SD carrier phase and pseudorange measurements $\{\varphi_{1,r}^{k,l}, \rho_{1,r}^{k,l}\}$ with a common reference satellite indexed by $l$, the cycle slip corrections (CSC) $\Delta N_{1,r}^{k,l}$ and the application of corrections for atmospheric delays, antenna phase center offsets (PCO) and variations (PCV), earth tides and phase wind up. Subsequently, the absolute position $\vec{x}_1$ of one reference network receiver, the relative positions $\vec{b}_{1,r}$, $r \in \{2, ..., R\}$, the code multipath errors $\Delta\rho_{MP}^k$, double difference ambiguities $N_{1,r}^{k,l}$ and SD satellite phase biases $\beta^{k,l}$ (lumped with SD ambiguities of reference receiver (= first receiver in Figure 3) are determined in a Kalman filter. The obtained float solution is improved by a subsequent ambiguity fixing and re-adjustment of satellite phase biases. A detailed description of the satellite phase bias estimation can be found in Section 3.

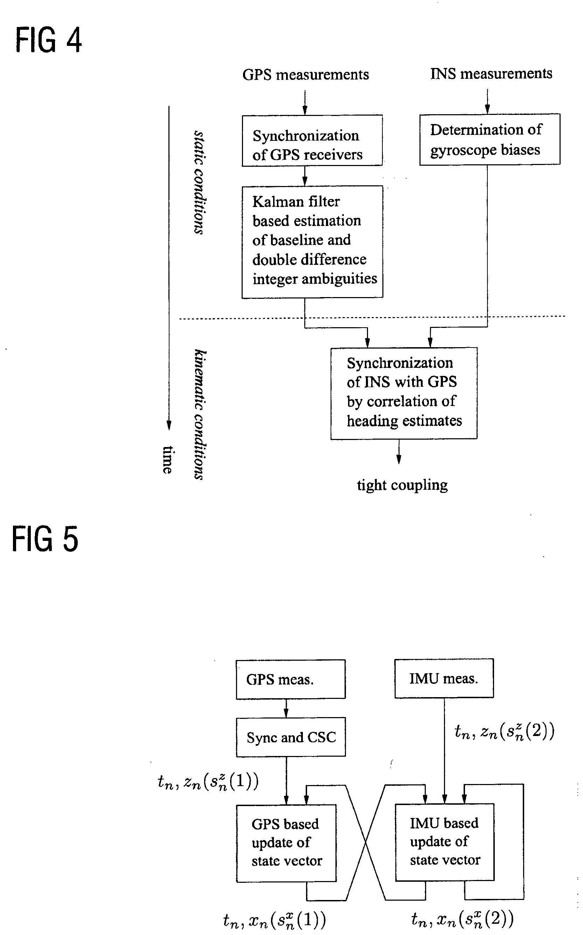

The obtained satellite phase bias estimates are then provided to the evaluation unit 11 of the mobile object 5 for joint PPP and attitude determination. The tight coupling of measurements from two low-cost GNSS receivers and an IMU requires a certain initialization as shown in Figure 4. It includes a static and a kinematic initialization. In the static phase, gyroscope biases are determined,the obeject receivers 6 and 7 are synchronized, the baseline vector and double difference ambiguities are determined with a Kalman filter, ambiguities are fixed, the baseline is re-adjusted and the heading is determined from the fixed baseline solution. In the dynamic phase, the INS and GNSS measurements are synchronized by correlating the GPS- and IMU-based heading estimates. This step is described in details in Section 5.

Once the initialization is completed, a state vector including the absolute position, velocity, acceleration, attitude angles, angular rates, single difference ambiguities, code multipath errors, gyroscope and accelerometer biases is determined with a Kalman filter. The carrier phase, code phase and Doppler measurements from two GNSS receivers and the 3D angular rate and acceleration measurements from an IMU are used to update the state vector in an alternating manner as shown in Figure 5. As can be recognized from Figure 5, the state vector is updated by both GPS and IMU measurements in an alternating way. As inertial measurements have higher date rate than GPS measurements, subsequent IMU-based state updates exist additionally. The tight coupling is described in details in Section 4. It differs from conventional tight couplings by including the satellite-satellite single difference ambiguities and code multipath offsets in the state vector to improve the positioning accuracy.

## 2. Measurement models

In this section, measurement models for joint PPP and attitude determination with tight coupling are introduced. The method takes the following particularities of low-cost GNSS receivers into account:

- lack of precise synchronization
- code multipath of several tens of metres
- frequent half and full cycle slips

Low-cost GNSS receivers have no timing input and are only synchronized with an accuracy of 1 ms to GPS system time. As satellites move with a speed of 3 km/s, the satellite position might change by several meters within the time of the receiver clock offset. For relative positioning, the satellite movement within the time difference between both receiver clock offsets affects the double difference measurements. If this satellite movement is not corrected, the double difference ambiguities are no longer integer valued and the position accuracy is significantly reduced. Therefore, the method take the receiver clock offset explicitly into account in each parameter of our measurement models. Code multipath is also higher for mass-market GNSS receivers due to the smaller receiver bandwidth and smaller antenna size. Additionally, half cycle slips occur much more frequently than for geodetic receivers.

Satellite-satellite single difference (SD) measurements with a common reference satellite (indexed by $l$) eliminate receiver-dependant biases and keep the absolute position information. The SD carrier phase measurements for satellites $k$ and $l$ and receiver $r$ at time $t_n + \delta t_r(t_n)$ (where $t_n$ is the received time as determined by the receiver and $\delta t_r(t_n)$ is the receiver clock offset at time $t_n$) is modeled as

$$
\begin{aligned}
&\quad\quad -\vec{x}^{\,k}(t_n + \delta t_r(t_n)) - \Delta\vec{x}^{\,k}(t_n)\Big) \\
&-\vec{e}^{\,l}_r(t_n + \delta t_r(t_n))\Big(\vec{x}_r(t_n + \delta t_r(t_n)) + \Delta\vec{x}_{\mathrm{ET}_r}(t_n) \\
&\quad\quad\quad\quad -\vec{x}^{\,l}(t_n + \delta t_r(t_n)) - \Delta\vec{x}^{\,l}(t_n)\Big) \\
&+ c\delta t_r^{k,l}(t_n) - I_r^{k,l}(t_n) + T_r^{k,l}(t_n) \\
&+ \lambda N_r^{k,l} + \lambda/2\,\Delta N_r^{k,l}(t_n) + \lambda\beta^{k,l}(t_n) + \lambda\Delta\varphi_{\mathrm{MP}^{k,l}}(t_n)
\end{aligned}
$$

with the following notations:

$\lambda$     wavelength of L1 carrier phase [0.19 m]

$t_n$     received time as determined by the receiver [s]

$\delta t_r$     receiver clock offset [s]

$\vec{e}^{\,k}_r$     normalized line of sight vector pointing from satellite $k$ to receiver $r$

$\vec{x}_r$     position of receiver $r$ [m]

$\Delta\vec{x}_{\mathrm{ET}_r}$     receiver position offset due to Earth tides [m]

$\vec{x}^k$     position of satellite $k$ using precise orbits [m]

$\Delta\vec{x}^k$     error of satellite position [m]

$c$     speed of light in vacuum [m/s]

$\delta t_r^k$     clock offset of satellite $k$ [s]

$I_r^k$     slant ionospheric delay [m]

$T_r^k$     slant tropospheric delay [m]

$N_r^k$     integer ambiguity [cycles]

$\Delta N_r^k$     cycle slip [half cycles]

$\beta^k$      satellite phase bias [cycles]

$\Delta\varphi_{\text{MP}_r^k}$      receiver phase multipath [cycles]

$\Delta\varphi_{\text{PW}_r^k}$      receiver phase wind-up [cycles]

$\Delta\varphi_{\text{PCO}_r^k}$      antenna phase center offset [cycles]

$\varepsilon_r^k$      phase noise [m]

In the following all terms are denoted in the ECEF frame if not otherwise stated. In equation (1), only the receiver and satellite positions explicitly have been considered at time $t_n + \delta t_r$. All other parameters are changing less quickly such that the change within $\delta t_r$ is negligible.

GNSS receivers also provide an unambiguous pseudorange measurement. We model the satellite-satellite SD of the pseudorange measurements similar to the SD carrier phase measurement, i.e.

$$
\begin{aligned}
\tilde{\rho}_r^{k,l}&(t_n + \delta t_r(t_n)) \\
&= \vec{e}_r^k(t_n + \delta t_r(t_n))\Big(\vec{x}_r(t_n + \delta t_r(t_n)) + \Delta\vec{x}_{\text{ET}_r}(t_n) \\
&\qquad\qquad - \vec{x}^k(t_n + \delta t_r(t_n)) - \Delta\vec{x}^l(t_n)\Big) \\
&\quad - \vec{e}_r^l(t_n + \delta t_r(t_n))\Big(\vec{x}_r(t_n + \delta t_r(t_n)) + \Delta\vec{x}_{\text{ET}_r}(t_n) \\
&\qquad\qquad - \vec{x}^l(t_n + \delta t_r(t_n)) - \Delta\vec{x}^l(t_n)\Big) \\
&\quad + c\delta t_r^{k,l}(t_n) + I_r^{k,l}(t_n) + T_r^{k,l}(t_n) + b^{k,l}(t_n) \\
&\quad + \Delta\rho_{\text{MP}_r^{k,l}}(t_n) + \eta_r^{k,l}(t_n),
\end{aligned}
\tag{2}
$$

with the satellite code bias $b^k$, the code multipath $\Delta\rho_{\text{MP}_r^k}$ and the code noise $\eta_r^k$ as additional parameters.

GNSS receivers also track the Doppler frequency for each satellite and, thereby, provide an information on the receiver velocity. We model the SD Doppler measurements as

$$
\begin{aligned}
\tilde{f}_{\text{D}_r}^{k,l}(t_n) &= -f_c\Big(\vec{e}_r^k(t_n)(\vec{v}_r(t_n) - \vec{v}^k(t_n))/c \\
&\qquad\quad - \vec{e}_r^l(t_n)(\vec{v}_r(t_n) - \vec{v}^l(t_n))/c\Big) \\
&\quad + f_c\delta\dot{\tau}^{k,l}(t_n) + \varepsilon_{f_{\text{D}_r}^{k,l}}(t_n),
\end{aligned}
\tag{3}
$$

with the carrier frequency $f_c$, the receiver velocity $\vec{v}_r$, the satellite velocity $\vec{v}^k$, the satellite clock drift $\delta\dot{\tau}^k$ and the measurement noise $\varepsilon_{f_{\text{D}_r}^{k,l}}$.

The SD carrier phase measurements are re-arranged for receiver 1, i.e. all known terms are brought to the left side which leaves the absolute position, SD ambiguities and phase biases, and SD phase multipath delays as unknowns:

$$-\vec{e}_1^{\,k}(t_n+\delta t_1(t_n))\Big(\Delta\vec{x}_{\mathrm{ET}_1}(t_n)-\vec{x}^{\,k}(t_n+\delta t_1(t_n))$$

$$-\Delta\vec{x}^{\,k}(t_n+\delta t_1(t_n))\Big)$$

$$+\vec{e}_1^{\,l}(t_n+\delta t_1(t_n))\Big(\Delta\vec{x}_{\mathrm{ET}_1}(t_n)-\vec{x}^{\,l}(t_n+\delta t_1(t_n))$$

$$-\Delta\vec{x}^{\,l}(t_n+\delta t_1(t_n))\Big)$$

$$-c\delta t_1^{k,l}(t_n)+I_1^{k,l}(t_n)-T_1^{k,l}(t_n)$$

$$-\lambda\Delta\varphi_{\mathrm{PW}_1^{k,l}}(t_n)-\lambda\Delta\varphi_{\mathrm{PCO}_1^{k,l}}(t_n)-\lambda/2\Delta N_1^{k,l}(t_n)$$

$$=\vec{e}_1^{\,k,l}(t_n+\delta t_1(t_n))\big(\vec{x}_1(t_n+\delta t_1(t_n))\big)$$

$$+\lambda(N_1^{k,l}+\beta^{k,l}(t_n))+\lambda\Delta\varphi_{\mathrm{MP}_1^{k,l}}(t_n)+\varepsilon_1^{k,l}(t_n). \tag{4}$$

The SD code measurements are rearranged in the same manner. For the Doppler measurements, the satellite velocities and clock drifts are a priori known, which enables us to rewrite equation (3) as

$$f_{\mathrm{D}_r}^{k,l}(t_n) \quad := \quad \tilde{f}_{\mathrm{D}_r}^{k,l}(t_n)-f_c\vec{e}_r^{\,k}(t_n)\vec{v}^{\,k}(t_n)/c$$

$$+f_c\vec{e}_r^{\,l}(t_n)\vec{v}^{\,l}(t_n)/c-f_c\delta\dot{\tau}^{k,l}(t_n)$$

$$= \quad -f_c\vec{e}_r^{\,k,l}(t_n)\vec{v}_r(t_n)/c+\varepsilon_{f_{\mathrm{D}_r}^{k,l}}(t_n). \tag{5}$$

Inertial sensors provide high-rate acceleration and angular rate measurements, which are not affected by GNSS signal reception conditions and enable a reliable detection and correction of cycle slips for kinematic receivers. The acceleration and angular rate are sensed in the sensor-fixed (s-) frame, which is centered at the sensor's chip and aligned with the principal axes of the chip. We assume that the s-frame is aligned with the body-fixed (b-) frame, which is centered at the vehicle and aligned with the longitudinal and transversal axes of the vehicle.

As GNSS and inertial measurements are obtained in different frames, a frame transformation is needed. We use the e-frame (also ECEF frame) for the sensor fusion. It is centered at the Earth's centre with the x-axis pointing in the equatorial plane towards the 0° meridian and the z-axis pointing towards the geographic north pole. The navigation (n-) frame is centered at the vehicle and aligned with the East, North and Up direction. The n-frame serves as a reference frame for the attitude of the vehicle. The acceleration measurement is provided in the b-frame and modeled as

$$a^{(b)}(t_n)=R_n^b(t_n)R_e^n(t_n)a^{(e)}(t_n)+b_a^{(b)}(t_n)$$

$$+g\begin{pmatrix}\sin(\theta(t_n))\\\sin(\varphi(t_n))\\\cos(\theta(t_n))\cos(\varphi(t_n))\end{pmatrix}+\varepsilon_a^{(b)}(t_n), \tag{6}$$

with the rotation matrices $R_e^n$ and $R_n^b$, the acceleration $a^{(e)}$ in the e-frame, the acceleration biases $b_a^{(b)}$ of the sensor in the b-frame, the gravitational acceleration $g$, the pitch angle $\theta$, the roll angle $\varphi$ and the measurement noise $\varepsilon_a^{(b)}$. The rotation from the e-frame into the n-frame depends on the latitude $\varphi_1$ and longitude $\lambda_1$ of receiver 1 and is given by

$$R_{e}^{n}(t_n) = R_1(\pi/2 - \varphi_1(t_n))R_3(\pi/2 + \lambda_1(t_n)). \tag{7}$$

The rotation from the n-frame into the b-frame depends on the heading $\psi$ and pitch $\theta$ of the vehicle and is given by

$$R_{n}^{b}(t_n) = R_2(-\theta(t_n))R_3(\pi/2 - \psi(t_n)). \tag{8}$$

The angular rate measurements are also biased and modeled in the b-frame as

$$[\dot{\psi}^{(b)}(t_n), \dot{\theta}^{(b)}(t_n), \dot{\varphi}^{(b)}(t_n)]^{\mathrm{T}}$$
$$= [\dot{\psi}(t_n), \dot{\theta}(t_n), \dot{\varphi}(t_n)]^{\mathrm{T}} + [b_{\dot{\psi}}^{(b)}(t_n), b_{\dot{\theta}}^{(b)}(t_n), b_{\dot{\varphi}}^{(b)}(t_n)]^{\mathrm{T}}$$
$$+ [\varepsilon_{\dot{\psi}}(t_n), \varepsilon_{\dot{\theta}}(t_n), \varepsilon_{\dot{\varphi}}(t_n)]^{\mathrm{T}}, \tag{9}$$

with the rate of heading $\dot{\psi}$, the rate of pitch $\dot{\theta}$, the rate of roll $\dot{\varphi}$, the respective biases $b_{\dot{\psi}}^{(b)}$, $b_{\dot{\theta}}^{(b)}$, $b_{\dot{\varphi}}^{(b)}$ and noise terms $\varepsilon_{\dot{\psi}}$, $\varepsilon_{\dot{\theta}}$ and $\varepsilon_{\dot{\varphi}}$.

### 3. Estimation of satellite phase biases

In this section, the satellite phase biases are determined with the network 14 of low-cost GNSS network receivers 15 to 17 . As the clock offsets of low-cost GNSS receivers are in the order of 1 ms, a synchronization correction is required for each single difference measurement of receiver $r \in \{2,...,R\}$. The first network receiver serves as a reference network receiver. The measurement model of equation (4) is used for the reference network receiver. For all other network receivers, we bring all known terms to the left side and consider the satellite and receiver position at time $t_n + \delta\tau_1(t_n)$ (instead of $t_n + \delta\tau_r(t_n)$) to obtain

$$\lambda\varphi_r^{k,l}(t_n + \delta t_r(t_n)) := \lambda\tilde{\varphi}_r^{k,l}(t_n + \delta t_r(t_n))$$
$$- \vec{e}_r^{k}(t_n)\left(\Delta\vec{x}_{\mathrm{ET}_r}(t_n) - \Delta\vec{x}^{k}(t_n)\right)$$
$$+ \vec{e}_r^{l}(t_n)\left(\Delta\vec{x}_{\mathrm{ET}_r}(t_n) - \Delta\vec{x}^{l}(t_n)\right)$$
$$+ \vec{e}_r^{k}(t_n + \delta t_1(t_n))\vec{x}^{k}(t_n + \delta t_1(t_n))$$
$$- \vec{e}_r^{l}(t_n + \delta t_1(t_n))\vec{x}^{l}(t_n + \delta t_1(t_n))$$
$$- c\delta t_r^{k,l}(t_n) + I_r^{k,l}(t_n) - T_r^{k,l}(t_n)$$
$$- \lambda\Delta\varphi_{\mathrm{PW}_r^{k,l}}(t_n) - \lambda\Delta\varphi_{\mathrm{PCO}_r^{k,l}}(t_n) - \lambda/2\Delta N_r^{k,l}(t_n)$$
$$= \vec{e}_1^{k,l}(t_n + \delta t_1(t_n))(\vec{x}_r(t_n + \delta t_1(t_n)))$$
$$+ \lambda(N_r^{k,l} + \beta^{k,l}(t_n)) + c_{1,r}^{k,l}(t_n) + \varepsilon_r^{k,l}(t_n), \tag{10}$$

with the synchronization correction $c_{1,r}^{k,l}$. It describes the change of the network receiver and satellite positions within $\delta t_r(t_n) - \delta t_1(t_n)$ and is given by

$$c_{1,r}^{k,l}(t_n) =$$

$$\vec{e}_r^k(t_n + \delta t_r(t_n))\left(\vec{x}_r(t_n + \delta t_r(t_n)) - \vec{x}^k(t_n + \delta t_r(t_n))\right)$$

$$-\vec{e}_r^l(t_n + \delta t_r(t_n))\left(\vec{x}_r(t_n + \delta t_r(t_n)) - \vec{x}^l(t_n + \delta t_r(t_n))\right)$$

$$-\vec{e}_1^k(t_n + \delta t_1(t_n))\left(\vec{x}_r(t_n + \delta t_1(t_n)) - \vec{x}^k(t_n + \delta t_1(t_n))\right)$$

$$+\vec{e}_1^l(t_n + \delta t_1(t_n))\left(\vec{x}_r(t_n + \delta t_1(t_n)) - \vec{x}^l(t_n + \delta t_1(t_n))\right). \tag{11}$$

The receiver clock offsets $\delta t_r(t_n)$ can be obtained by a stand-alone standard least-squares estimation of the receiver position and clock offset.

It is now shown that a sub-millimetre level accuracy can be obtained for the synchronization correction despite the poor accuracy of the receiver clock offset estimates, which is in the order of 1 m/$c$ = 3ns. The satellites $k$ and $l$ are treated in the same manner in the correction. Therefore, we restrict ourselves to one satellite for the analysis of the accuracy of the correction. We rearrange the terms relating to satellite $k$ into two additive terms:

$$\vec{e}_r^k(t_n + \delta t_r(t_n))\left(\vec{x}_r(t_n + \delta t_r(t_n)) - \vec{x}^k(t_n + \delta t_r(t_n))\right)$$

$$-\vec{e}_1^k(t_n + \delta t_1(t_n))\left(\vec{x}_r(t_n + \delta t_1(t_n)) - \vec{x}^k(t_n + \delta t_1(t_n))\right)$$

$$= \left(\vec{e}_r^k(t_n + \delta t_r(t_n)) - \vec{e}_1^k(t_n + \delta t_1(t_n))\right)$$

$$\cdot\left(\vec{x}_r(t_n + \delta t_r(t_n)) - \vec{x}^k(t_n + \delta t_r(t_n))\right)$$

$$+\vec{e}_1^k(t_n + \delta t_1(t_n))$$

$$\cdot\left(\vec{x}_r(t_n + \delta t_r(t_n)) - \vec{x}_1(t_n + \delta t_1(t_n))\right.$$

$$\left. -\left(\vec{x}^k(t_n + \delta t_r(t_n)) - \vec{x}^k(t_n + \delta t_1(t_n))\right)\right). \tag{12}$$

The first term scales any error in the receiver or satellite position by the difference in line of sight vectors. An upper bound on this scaling factor is given by

$$\frac{\left\|\vec{e}_r^k(t_n + \delta t_r(t_n)) - \vec{e}_1^k(t_n + \delta t_1(t_n))\right\|}{\left\|\vec{x}^k(t_n) - \vec{x}_r(t_n)\right\|} \leq \frac{\left\|\Delta\vec{x}^k\right\| + \left\|\Delta\vec{v}_r\right\| \cdot |\delta t_r(t_n) - \delta t_1(t_n)|}{\left\|\vec{x}^k(t_n) - \vec{x}_r(t_n)\right\|}, \tag{13}$$

with $\Delta\vec{v}_r$ being the uncertainty of the receiver's velocity estimate. Assuming an orbital accuracy of 1 cm, a receiver velocity uncertainty of 0.1 m/s, and a timing offset of 1 ms, then the scaling factor is at most $10^{-2}/(2\cdot10^7) = 5\cdot10^{-10}$. Thus, the first term in equation (11) does not limit the accuracy of the correction. The second term describes the change of the receiver/satellite position within $\delta t_r(t_n)$ - $\delta t_1(t_n)$. For the given uncertainties, an accuracy of the correction of 0.1m/s·0.001s = 0.1 mm can be obtained.

Cycle slips need to be corrected as well. As the receivers are static for satellite bias determination, it is sufficient to use triple difference phase measurements for the correction of half cycle slips, i.e.

$$\Delta\breve{N}_{1,r}^{k,l}(t_n) = \left[\left(\lambda\varphi_{1,2}^{k,l}(t_n) - \lambda\varphi_{1,2}^{k,l}(t_{n-1})\right)/(\lambda/2)\right]. \tag{14}$$

The position $\vec{x}_r, r = \{2,...,R\}$, can be expressed in terms of $\vec{x}_1$ and the baseline vector $\vec{b}_{1,r}$ between both receivers, i.e.

$$\vec{x}_r(t_n) = \vec{x}_1(t_n) - \vec{b}_{1,r}(t_n). \qquad (15)$$

Similarly, we express the single difference ambiguities $N_r^{k,l}$ of the $r$-th receiver in terms of $N_1^{k,l}$ and of the double difference integer ambiguities $N_{1,r}^{k,l}$ as

$$N_r^{k,l} = N_1^{k,l} - N_{1,r}^{k,l}, \qquad (16)$$

which enables us to rewrite equation (10) as

$$
\begin{aligned}
\lambda\varphi_r^{k,l}(t_n + \delta t_r(t_n)) &:= \lambda\tilde{\varphi}_r^{k,l}(t_n + \delta t_r(t_n)) \\
&\quad - \vec{e}_r^{k}(t_n)\left(\Delta\vec{x}_{\mathrm{ET}_r}(t_n) - \Delta\vec{x}^{k}(t_n)\right) \\
&\quad + \vec{e}_r^{l}(t_n)\left(\Delta\vec{x}_{\mathrm{ET}_r}(t_n) - \Delta\vec{x}^{l}(t_n)\right) \\
&\quad + \vec{e}_r^{k}(t_n + \delta t_1(t_n))\vec{x}^{k}(t_n + \delta t_1(t_n)) \\
&\quad - \vec{e}_r^{l}(t_n + \delta t_1(t_n))\vec{x}^{l}(t_n + \delta t_1(t_n)) \\
&\quad - c\delta t_r^{k,l}(t_n) + I_r^{k,l}(t_n) - T_r^{k,l}(t_n) \\
&\quad - \lambda\Delta\varphi_{\mathrm{PW}_r^{k,l}}(t_n) - \lambda\Delta\varphi_{\mathrm{PCO}_r^{k,l}}(t_n) - \lambda/2\Delta N_r^{k,l}(t_n) \\
&= \vec{e}_1^{k,l}(t_n + \delta t_1(t_n)) \\
&\quad \cdot (\vec{x}_1(t_n + \delta t_1(t_n)) - \vec{b}_{1,r}(t_n + \delta t_1(t_n))) \\
&\quad + \lambda(N_1^{k,l} - N_{1,r}^{k,l} + \beta^{k,l}(t_n)) + c_{1,r}^{k,l}(t_n) + \varepsilon_r^{k,l}(t_n). \qquad (17)
\end{aligned}
$$

It is sufficient to use only carrier phase and pseudorange measurements for satellite bias determination with static receivers. We stack all measurements at time $t_n$ in a vector to obtain

$$z_n = \left(\lambda\varphi_1^{\mathrm{T}}(t_n), \dots, \lambda\varphi_R^{\mathrm{T}}(t_n), \rho_1^{\mathrm{T}}(t_n), \dots, \rho_R^{\mathrm{T}}(t_n)\right)^{\mathrm{T}}, \qquad (18)$$

where SD phase and code measurements are synchronized and half cycle slips are precorrected, i.e.

$$
\begin{aligned}
\lambda\varphi_r^{\mathrm{T}} &= \left(\lambda\varphi_r^{1,l} - c_{1,r}^{1,l} - \lambda/2\Delta\breve{N}_{1,r}^{1,l}, \dots, \right. \\
&\qquad \left. \lambda\varphi_r^{32,l} - c_{1,r}^{32,l} - \lambda/2\Delta\breve{N}_{1,r}^{32,l}\right)^{\mathrm{T}}, \\
\rho_r^{\mathrm{T}} &= \left(\rho_r^{1,l} - c_{1,r}^{1,l}, \dots, \rho_r^{32,l} - c_{1,r}^{32,l}\right)^{\mathrm{T}}. \qquad (19)
\end{aligned}
$$

Additionally, all unknown parameters at time $t_n$ are stacked in the state vector

$$x_n = \left( \vec{x}_1^{\mathrm{T}}(t_n), \vec{b}_{1,2}^{\mathrm{T}}(t_n), \ldots, \vec{b}_{1,R}^{\mathrm{T}}(t_n), \right.$$
$$\Delta \rho_{\mathrm{MP}_1}^{\mathrm{T}}(t_n), \ldots, \Delta \rho_{\mathrm{MP}_R}^{\mathrm{T}}(t_n),$$
$$\left. N_1^{\mathrm{T}}(t_n), N_{1,2}^{\mathrm{T}}(t_n), \ldots, N_{1,R}^{\mathrm{T}}(t_n) \right)^{\mathrm{T}}, \qquad (20)$$

with

$$\Delta \rho_{\mathrm{MP}_r} = \left( \Delta \rho_{\mathrm{MP}_r^{1,l}}, \ldots, \Delta \rho_{\mathrm{MP}_r^{32,l}} \right)^{\mathrm{T}} \in \mathbf{R}^{32 \times 1}$$
$$N_1 = \left( N_1^{1,l} + \beta^{1,l}, \ldots, N_1^{32,l} + \beta^{32,l} \right)^{\mathrm{T}} \in \mathbf{P}^{32 \times 1}$$
$$N_{1,r} = \left( N_{1,r}^{1,l}, \ldots, N_{1,r}^{32,l} \right)^{\mathrm{T}} \in \mathbf{Z}^{32 \times 1}. \qquad (21)$$

At any epoch, only a subset of satellites is visible. We denote the subset of available measurements of one observation type by $s_n^z$. Similarly, the variable $s_n^x$ is introduced for describing the subset of state parameters that can be determined at one epoch.

Both the measurement and state space model are assumed to be linear, i.e.

$$z_n(s_n^z) = H_n x_n(s_n^x) + \eta_{z_n(s_n^z)},$$
$$x_n(s_n^x) = \Phi x_n(s_n^x) + \eta_{x_n(s_n^x)}, \qquad (22)$$

with $H_n$ being implicitly defined by the measurement models of equations (4) and (17), $\Phi = 1$ is the identity matrix, and $\eta_{z_n}$ and $\eta_{x_n}$ are the measurement and process noises.

We assume that both noise processes are Gaussian distributed, i.e.

$$\eta_{z_n(s_n^z)} : \; \mathrm{N}(0, \Sigma_{z_n(s_n^z)}) \quad \text{and} \quad \eta_{x_n(s_n^x)} : \; \mathrm{N}(0, \Sigma_{x_n(s_n^x)}). \qquad (23)$$

The state vector is estimated with a Kalman filter. The a posteriori state estimate is given by

$$\hat{x}_n^+(s_n^x) = \hat{x}_n^-(s_n^x) + K_n\left( z_n(s_n^z) - H_n \hat{x}_n^-(s_n^x) \right), \qquad (24)$$

with the predicted state estimate $\hat{x}_n^- = \Phi \hat{x}_{n-1}^+$ and the Kalman gain

$$K_n = \Sigma_{\hat{x}_n^-(s_n^x)} H_n^{\mathrm{T}} \left( H_n \Sigma_{\hat{x}_n^-(s_n^x)} H_n^{\mathrm{T}} + \Sigma_{z_n(s_n^z)} \right)^{-1}. \qquad (25)$$

The covariance matrix of the float solution of equation (24) is given by

$$\Sigma_{\hat{x}_n^+(s_n^x)} = (1 - K H_n) \Sigma_{\hat{x}_n^-(s_n^x)}. \qquad (26)$$

The accuracy of the state estimation can be significantly improved if the integer property of the double difference ambiguities is taken into account. We denote by $\hat{N}^+$ the subset of state parameters describing the DD float ambiguity estimates in equation (24). The ambiguities are fixed by an integer least-squares estimation, i.e.

$$\breve{N} = \arg \min_{N} \left\| \hat{N}^+ - N \right\|^2_{\Sigma^{-1}_{\hat{N}^+}}$$

$$= \arg \min_{N} \left\| L^{-1}(\hat{N}^+ - N) \right\|^2_{D^{-1}} \qquad (27)$$

where an $LDL^{\mathrm{T}}$ decomposition was applied to the covariance matrix $\Sigma_{\hat{N}^+}$ which was obtained from $\Sigma_{\hat{X}^+}$. The sum of squared decorrelated ambiguity residuals can also be expressed in terms of conditional ambiguities. Let $\hat{N}^{j|1,\cdots,j\text{-}1}$, $j \in$ $\{1,\ldots,K\}$ denote the $j$-th conditional ambiguity and let $\sigma^2_{\hat{N}^{j|1,\ldots,j-1}} = D^{-1}_{j,j}$ be its variance, then the integer estimate of $N$ is given by

$$\breve{N} = \arg \min_{N^1,\ldots,N^K} \sum_{j=1}^{k} \frac{(N^j - \hat{N}^{j|1,\ldots,j-1})^2}{\sigma^2_{\hat{N}^{j|1,\ldots,j-1}}}. \qquad (28)$$

The integer least-squares estimation requires a search of the "best" candidate inside a predefined search space volume $\chi^2$ :

$$\left\| \hat{N}^+ - N \right\|^2_{\Sigma^{-1}_{\hat{N}^+}} \leq \chi^2. \qquad (29)$$

Writing the sum of squared ambiguity residuals in terms of the conditional ambiguities, and rearranging yields a quadratic inequality for determining $N^i$:

$$\frac{(N^i - \hat{N}^{i|1,\ldots,i-1})^2}{\sigma^2_{\hat{N}^{i|1,\ldots,i-1}}} \leq \chi^2 - \sum_{j \neq i} \frac{(N^j - \hat{N}^{j|1,\ldots,j-1})^2}{\sigma^2_{\hat{N}^{j|1,\ldots,j-1}}}$$

$$\leq \chi^2 - \sum_{j=1}^{i-1} \frac{(N^j - \hat{N}^{j|1,\ldots,j-1})^2}{\sigma^2_{\hat{N}^{j|1,\ldots,j-1}}}. \qquad (30)$$

Solving it for $N^i$ gives a lower and un upper bound:

$$N^i \geq \hat{N}^{i|1,\ldots,i-1} - \sigma_{\hat{N}^{i|1,\ldots,i-1}} \sqrt{\alpha_i}$$

$$N^i \leq \hat{N}^{i|1,\ldots,i-1} + \sigma_{\hat{N}^{i|1,\ldots,i-1}} \sqrt{\alpha_i}, \qquad (31)$$

with

$$\alpha_i = \chi^2 - \sum_{j=1}^{i-1} \frac{(N^j - \hat{N}^{j|1,\ldots,j-1})^2}{\sigma^2_{\hat{N}^{j|1,\ldots,j-1}}}. \qquad (32)$$

Once the tree search is completed and the candidate of smallest sum of squared errors is selected, all real-valued parameters can be readjusted. The obtained fixed solution has a far higher accuracy than the float solution if the ambiguities are fixed correctly.

Finally, the real-valued lumped sum of the SD satellite phase biases and integer ambiguities of the first receiver serves as a correction for kinematic Precise Point Positioning. It is sufficient to provide the real-valued part of this sum, i.e.

$$\beta^{k,l} + N_1^{k,l} - [\beta^{k,l} - N_1^{k,l}] = \beta^{k,l} - [\beta^{k,l}], \tag{33}$$

as the kinematic receiver is determining an integer ambiguity for each SD measurement.

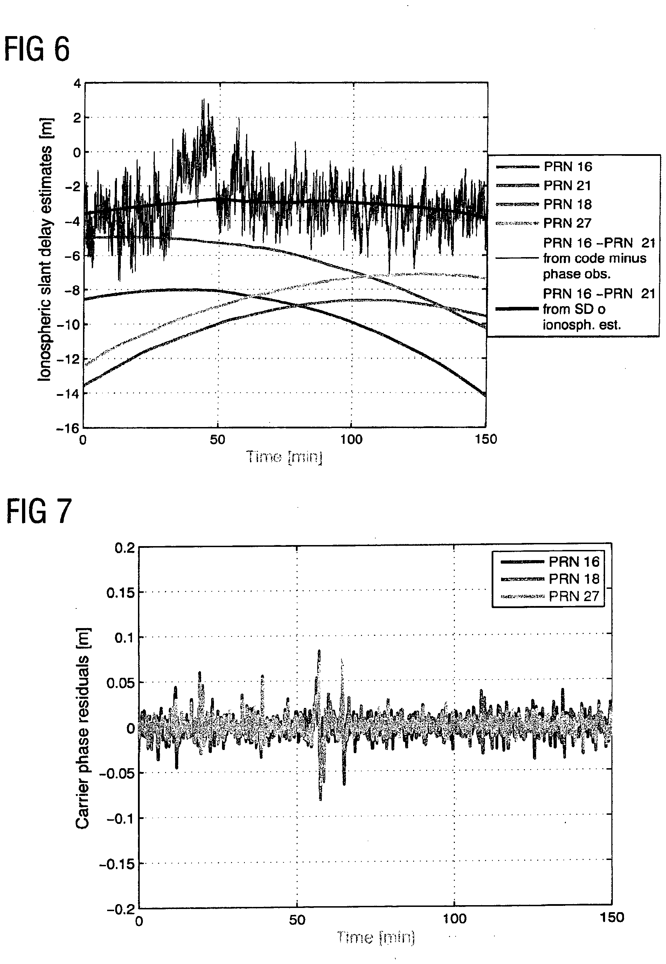

It should be noted that ionospheric delays can also be taken into acount as will be explained be reference to Figure 6. Figure 6 illustrates an estimation of ionospheric delays with the local network 14 of the three single-frequency low-cost GNSS receivers 15 to 17: The slant ionospheric delays are obtained from the vertical ionospheric delays, which were determined jointly with the rates of the vertical ionospheric delays and the satellite phase biases (lumped with ambiguities). The variation in time is mainly caused by changes in the mapping functions and only to a small extent by changes in zenith delays. The noise level of the ionospheric delay estimates is in the order of millimeters as satellite-satellite SD carrier phase measurements were only used. It is much more accurate than a code minus phase based ionospheric delay estimation.

Figure 7 shows the carrier phase residuals of ionospheric delay estimation. The vertical ionospheric delays, their rates and the satellite phase biases (lumped with ambiguities) are determined from the satellite-satellite SD carrier phase measurements and from some a priori known statistics on the unknown parameters. The residuals are unbiased and drift-free, which indicates the correctness of the model. The noise level of the residuals is in the order of a few centimeters, which corresponds to some short-term ionospheric variations and SD phase multipath.

## 4. Kinematic PPP and attitude determination: GPS/ INS sensor fusion with tight coupling

In this section, a joint PPP and attitude determination is described. The measurements from two low-cost GNSS object receivers 6 and 7 as well as the measurements of an accelerometer and a gyroscope that form part of the kinematic sensor 19 are tightly coupled in an extended Kalman filter. The satellite phase bias estimates of equation (33) are used to restore the integer property of the absolute SD ambiguities and, thereby, to improve the absolute position accuracy. As the gyroscope provides the rate of heading, pitch and roll, we parameterize also the baseline vector $\vec{b}_{1,2}$ in terms of the attitude angles, i.e.

$$\vec{b}_{1,2} = \vec{x}_1 - \vec{x}_2 = l \cdot \begin{pmatrix} \sin(\psi)\cos(\theta) \\ \cos(\psi)\cos(\theta) \\ \sin(\theta) \end{pmatrix}. \tag{34}$$

The set of measurements is divided into two types $\gamma \in \{1,2\}$ of subsets: A first subset of GNSS measurements which is denoted by $s_n^z(\gamma = 1)$ and a second subset of INS measurements described by $s_n^z(\gamma = 2)$. The first subset is given by

$$z_n(s_n^z(1)) = \left( \lambda\varphi_1^{\mathrm{T}}(t_n), \lambda\varphi_2^{\mathrm{T}}(t_n), \rho_1^{\mathrm{T}}(t_n), \rho_2^{\mathrm{T}}(t_n), f_{\mathrm{D}_1}^{\mathrm{T}}(t_n), f_{\mathrm{D}_2}^{\mathrm{T}}(t_n) \right)^{\mathrm{T}}, \tag{35}$$

where the SD carrier phases are corrected for the SD satellite phase biases of equation (33) in addition to the synchronization and cycle slip corrections, i.e.

$$\lambda\varphi_r^{\mathrm{T}} = \left( \lambda\varphi_r^{1,l} - c_{1,r}^{1,l} - \lambda/2\Delta\check{N}_{1,r}^{1,l} - \lambda(\hat{\beta}^{1,l} - [\hat{\beta}^{1,l}]), \dots, \right.$$

$$\left. \lambda\varphi_r^{32,l} - c_{1,r}^{32,l} - \lambda/2\Delta\check{N}_{1,r}^{32,l} - \lambda(\hat{\beta}^{32,l} - [\hat{\beta}^{32,l}]) \right)^{\mathrm{T}}. \tag{36}$$

The second subset includes the angular rate and acceleration measurements and is given by

$$z_n(s_n^z(2)) = \left( \dot{\psi}^{(b)}(t_n), \dot{\theta}^{(b)}(t_n), \dot{\varphi}^{(b)}(t_n), \right.$$
$$\left. a_x^{(b)}(t_n), a_y^{(b)}(t_n), a_z^{(b)}(t_n) \right)^{\mathrm{T}}. \tag{37}$$

Similarly, we introduce two subsets of state parameters: one for the GNSS update and for the IMU update. We can express the single difference ambiguities of the second and any further GNSS receivers in terms of the single difference ambiguities of the first receiver and the double difference ambiguities between the first and any further receiver as

$$N_r = N_1 - N_{1,r} \text{ with } r \geq 2. \tag{37 a}$$

The set of state parameters updated by GNSS measurements is written as

$$x_n(s_n^x(1)) = \left( \vec{x}_1^{\mathrm{T}}(t_n), \vec{v}_1^{\mathrm{T}}(t_n), \psi(t_n), \dot{\psi}(t_n), \theta(t_n), \dot{\theta}(t_n), \right.$$
$$\varphi(t_n), \dot{\varphi}(t_n), N_1^{\mathrm{T}}(t_n), N_{1,2}^{\mathrm{T}}(t_n),$$
$$\Delta\rho_{\mathrm{MP}_1}^{\mathrm{T}}(t_n), \Delta\rho_{\mathrm{MP}_2}^{\mathrm{T}}(t_n),$$
$$\left. b_{\dot{\psi}}^{(b)}(t_n), b_{\dot{\theta}}^{(b)}(t_n), b_{\dot{\varphi}}^{(b)}(t_n) \right)^{\mathrm{T}}. \tag{38}$$

Note that the IMU biases of the angular rate measurements are also included in the state vector although not being directly observable by GPS. However, the Doppler measurements of the 2nd receiver provide an unbiased information on the angular rates and, thereby, correct also the biases of the angular rates. These biases are directly observable by the gyroscope but can not be separated from the angular rates without GPS. The subset of state parameters updated by INS measurements is given by

$$x_n(s_n^x(2)) = \left( \vec{x}_1^{\mathrm{T}}(t_n), \vec{v}_1^{\mathrm{T}}(t_n), \vec{a}_1^{\mathrm{T}}(t_n), \right.$$
$$\psi(t_n), \dot{\psi}(t_n), \theta(t_n), \dot{\theta}(t_n), \varphi(t_n), \dot{\varphi}(t_n),$$
$$b_{\dot{\psi}}^{(b)}(t_n), b_{\dot{\theta}}^{(b)}(t_n), b_{\dot{\varphi}}^{(b)}(t_n),$$
$$\left. b_{a_x}^{(b)}(t_n), b_{a_y}^{(b)}(t_n), b_{a_z}^{(b)}(t_n) \right)^{\mathrm{T}}. \tag{39}$$

The measurements of both observation types are used to update the state vector in a tight coupling. As the measurement rate of most low-cost gyroscopes and accelerometers is 100 Hz and, thus, higher than the measurement rate of most low-cost GNSS receivers, the state vector is updated more often by IMU than by GNSS measurements. The introduction of the subset type $\gamma$ enables an elegant notation as the state estimation based on GNSS and INS measurements can be described with the same expressions.

The trigonometric functions in equation (34) result in a non-linear measurement model that is given by

$$z_n(s_n^z(\gamma)) = h_n(x_n(s_n^x(\gamma))) + \eta_{z_n}(s_n^z(\gamma)), \tag{40}$$

with $h_n(\cdot)$ being implicitly defined by the measurement models and $\eta_{z_n}(s_n^z(\gamma)): \ \mathrm{N}\left(0, \Sigma_{z_n(s_n^z(\gamma))}\right)$ is the Gaus-

sian measurement noise. The vehicle dynamics and temporal variations of the code multipath errors, gyroscope and acceleration biases are described in the state space model. We consider a linear state space model, i.e.

$$x_n(s_n^x(\gamma)) = \Phi x_{n-1}(s_n^x(\gamma)) + \eta_{x_n}(s_n^x(\gamma)), \tag{41}$$

with the process noise $\eta_{x_n}(s_n^x(\gamma)): \mathbf{N}\left(0, \Sigma_{x_n(s_n^x(\gamma))}\right).$

The state vector is determined with an extended Kalman filter. It includes the state prediction

$$\hat{x}_n^-(s_n^x(\gamma)) = \Phi \hat{x}_{n-1}^+(s_n^x(\gamma)), \tag{42}$$

with the covariance matrix of the predicted state

$$\Sigma_{\hat{x}_n^-(s_n^x(\gamma))} = \Phi \Sigma_{\hat{x}_{n-1}^+(s_n^x(\gamma))} \Phi^{\mathrm{T}} + \Sigma_{x_n(s_n^x(\gamma))}, \tag{43}$$

and the state update

$$\hat{x}_n^+(s_n^x(\gamma)) = \hat{x}_n^-(s_n^x(\gamma)) + K_n\left(z_n(s_n^z(\gamma)) - h_n(\hat{x}_n^-(s_n^x(\gamma)))\right). \tag{44}$$

The latter one requires the evaluation of a non-linear function. As the statistics of a non-linear function can not be determined analytically, the baseline $\vec{b}_{1,2}$ of (34) is linearized as

$$\vec{b}_{1,2} \approx (\vec{b}_{1,2})_0$$
$$+ \frac{\partial \vec{b}_{1,2}}{\partial \psi}\bigg|_{\substack{\psi=\psi_0 \\ \theta=\theta_0}} \cdot (\psi - \psi_0) + \frac{\partial \vec{b}_{1,2}}{\partial \theta}\bigg|_{\substack{\psi=\psi_0 \\ \theta=\theta_0}} \cdot (\theta - \theta_0). \tag{45}$$

The Doppler measurement of the second receiver depends on the velocity of the second receiver, which is given by

$$\vec{v}_2 = \dot{\vec{x}}_2 = \dot{\vec{x}}_1 - \dot{\vec{b}}_{1,2}$$
$$= \dot{\vec{x}}_1 - l \cdot \left(\begin{pmatrix} \cos(\psi)\cos(\theta) \\ -\sin(\psi)\cos(\theta) \\ 0 \end{pmatrix} \cdot \dot{\psi}\right.$$
$$\left. + \begin{pmatrix} -\sin(\psi)\sin(\theta) \\ -\cos(\psi)\sin(\theta) \\ \cos(\theta) \end{pmatrix} \cdot \dot{\theta}\right), \tag{46}$$

and, thus, is also non-linear in $\psi$ and $\theta$. Therefore, the baseline rate is also linearized as

$$\dot{\vec{b}}_{1,2} \approx (\dot{\vec{b}}_{1,2})_0$$

$$+ \left( \frac{\partial \dot{\vec{b}}_{1,2}}{\partial \psi}, \frac{\partial \dot{\vec{b}}_{1,2}}{\partial \theta}, \frac{\partial \dot{\vec{b}}_{1,2}}{\partial \dot{\psi}}, \frac{\partial \dot{\vec{b}}_{1,2}}{\partial \dot{\theta}} \right) \Bigg|_{\substack{\psi=\psi_0, \dot{\psi}=\dot{\psi}_0 \\ \theta=\theta_0, \dot{\theta}=\dot{\theta}_0}} \begin{pmatrix} \psi - \psi_0 \\ \theta - \theta_0 \\ \dot{\psi} - \dot{\psi}_0 \\ \dot{\theta} - \dot{\theta}_0 \end{pmatrix}. \tag{47}$$

Once $h_n(\cdot)$ is linearized, the covariance matrix of the state update can be easily determined as

$$\Sigma_{\hat{x}_n^+(s_n^x(\gamma))} = (1 - K_n H_n) \Sigma_{\hat{x}_n^-(s_n^x(\gamma))}. \tag{48}$$

The accuracy of the state estimates improves if the single and double difference integer ambiguities are fixed correctly to integers. The initial ambiguity fixing can be performed already in static conditions, i.e. without inertial measurements. In this case, the state vector of equation (38) simplifies to

$$x_n = \left( \vec{x}_1^{\mathrm{T}}(t_n), \vec{b}_{1,2}^{\mathrm{T}}(t_n), N_1^{\mathrm{T}}(t_n), N_{1,2}^{\mathrm{T}}(t_n), \right.$$
$$\left. \Delta\rho_{\mathrm{MP}_1}^{\mathrm{T}}(t_n), \Delta\rho_{\mathrm{MP}_2}^{\mathrm{T}}(t_n) \right)^{\mathrm{T}}. \tag{49}$$

The reliability of the fixing of double difference ambiguities increases if the baseline length a priori information is also taken into account. Therefore, the unconstrained integer least squares estimation of equation (27) is extended to

$$\breve{N} = \arg\min_N \left( \left\| \hat{N}^+ - N \right\|_{\Sigma_{\hat{N}^+}^{-1}}^2 \right.$$
$$\left. + \min_\xi \left( \left\| \breve{\xi}(N) - \xi \right\|_{\Sigma_{\breve{\xi}(N)}}^2 + (\|S\xi\| - l)^2 / \sigma_l^2 \right) \right), \tag{50}$$

with $l$ and $\sigma_l$ being the a priori information on the baseline length and its uncertainty, and S is a selection matrix for selecting the baseline coordinates in $x_n$. The constrained integer least-squares estimation of equation (50) requires again a search, which is written as an inequality:

$$\left\| \hat{N}^+ - N \right\|_{\Sigma_{\hat{N}^+}^{-1}}^2$$
$$+ \min_\xi \left( \left\| \breve{\xi}(N) - \xi \right\|_{\Sigma_{\breve{\xi}(N)}}^2 + (\|S\xi\| - l)^2 / \sigma_l^2 \right) \le \chi^2 \tag{51}$$

Expressing the ambiguity residuals in terms of the conditional ambiguity estimates and solving for $N^i$ results in a lower and upper bound for each ambiguity according to equation (31) but with different

$$\alpha_i = \chi^2 - \sum_{j=1}^{i-1} \frac{(N^j - \hat{N}^{j|1,\ldots,j-1})^2}{\sigma^2_{\hat{N}^{j|1,\ldots,j-1}}}$$

$$-\min_{\xi} \left( \left\| \breve{\xi}(N) - \xi \right\|^2_{\Sigma_{\breve{\xi}(N)}} + (\|S\xi\| - l)^2 / \sigma_l^2 \right). \qquad (52)$$

As the $\alpha_i$ of equation (52) are smaller than these in equation (32), the search intervals are smaller for the constrained than for the unconstrained tree search. However, the computation of the lower and upper bounds becomes more demanding.

**5. Synchronization between GNSS and INS measurements**

Low-cost inertial measurement units do not have any clock and, thus, can not assign any time stamp to the measurements. In this section, a synchronization method is proposed for low-cost inertial measurements.

It determines the heading in two different manners: The first one is obtained solely from GPS. The second one uses GPS only for initialization and subsequently integrates the heading solely with gyroscope measurements. As the angular rate measurements are not synchronized with GPS, both heading curves are shifted in time. The correlation of both heading curves enables the determination of the time offset and, thus, the synchronization of INS with GPS. This approach requires some dynamics (i.e. a certain change of heading) and a correction of all cycle slips of the GPS-only solution.

As the angular rate measurements show a higher data rate than the GPS measurements, the heading of the GPS-only solution is interpolated to achieve the same data rate. A linear interpolation is in general sufficient as the rate of heading can be assumed constant between two subsequent GPS measurement epochs.

Once a sufficient change of heading is observed and the GPS-based heading estimates are interpolated, the timing offset $\Delta t$ between the GPS-based and INS-based heading is found by searching the maximum correlation, i.e.

$$\Delta \hat{t} = \max_{\Delta t} \sum_{n=1}^{N} \psi^{\text{GPS}}(t_n) \psi^{\text{INS}}(t_n - \Delta t), \qquad (53)$$

with $\psi^{\text{GPS}}$ being the GPS-only based heading and

$$\psi^{\text{INS}}(t_n) = \psi^{\text{GPS}}(t_0) + \sum_{i=1}^{n} \dot{\psi}^{\text{INS}}(t_i) \cdot (t_i - t_{i-1}). \qquad (54)$$

As most gyroscopes have a data rate of at least 100 Hz, the inertial measurements can be synchronized with GPS with an accuracy of 10 ms.

**6. Measurement results**

In this section, the proposed kinematic PPP and attitude determination is verified with real measurements from low-cost GNSS receivers and an inertial sensor. First, the hardware set-up is described. Subsequently, the measurement and process noise assumptions are provided, and the obtained measurement results are analyzed. The measurement test was performed with a vehicle, on which the following hardware was mounted:

- 2 u-blox LEA 6T GPS receivers with 5 Hz data rate
- 2 L1 patch antennas mounted on the roof of a vehicle along its longitudinal axis with a baseline length of $l = 1.2$ m and $\sigma_l = 1$ cm
- MPU 9150 inertial sensor from Invensense with a 3D gyroscope, a 3D accelerometer and a 3D magnetometer mounted on the roof of the vehicle
- reference system: high-grade inertial sensor and geodetic GNSS receiver (tightly coupled)

Table 1 and 2 include our measurement and process noise assumptions. The measurement statistics were determined in static conditions as follows: For the GNSS measurements, double differences were performed and analyzed over a (short) time period of 30 seconds. As static double differences can be well approximated by a linear model over such short time periods, a least-squares estimation of the coefficients of the linear model was performed. The standard deviations of the double difference noises were then obtained from the RMS of the residuals of the least-squares estimation. The standard deviations of the undifferenced measurements were obtained by scaling of the standard deviations of the double differences. For the INS measurements, the same approach was used, i.e. measurements in static conditions were described by a linear model for a short period of time.

The process noise assumptions were chosen according to the dynamics of the vehicle, the temporal variation of multipath errors, and the sensor characteristics.

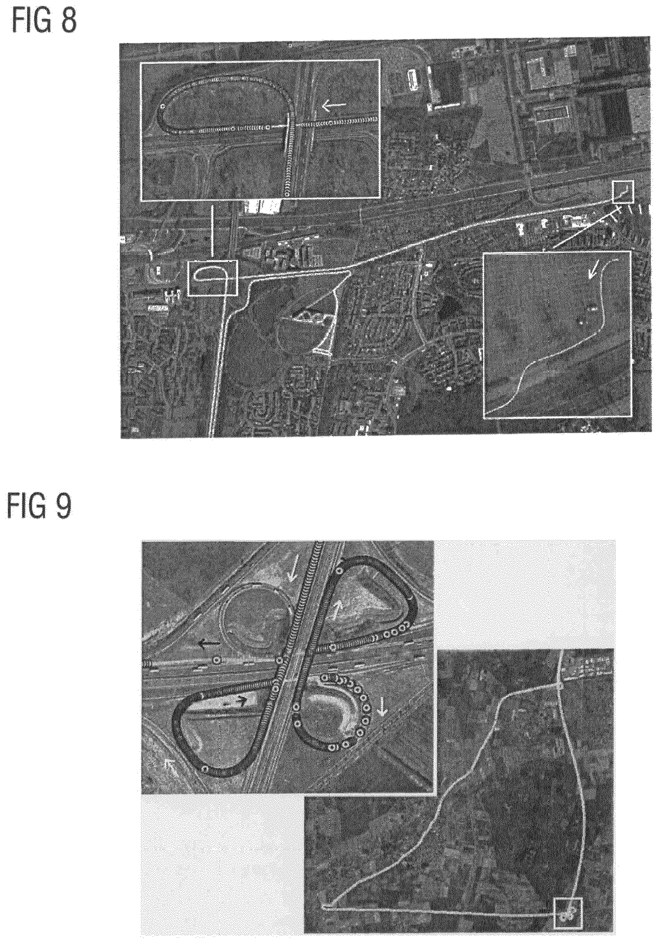

Figure 8 and 9 show the vehicle's track as obtained from the absolute position estimates $\ddot{x}_l$ of the first object receiver (revceiver 1). Figure 8 shows the northern part of vehicle's track during test drive as determined by the proposed PPP with tight coupling of two low-cost GNSS receivers, a gyroscope and an accelerometer. The starting point is in the right part of the first figure. The initial heading was -98°, i.e. the car was oriented in western direction. The enlarged sections show the start and the passing below a bridge. Each marker refers to a GPS-based state update. Figure 9 shows the southern part of vehicle's track. The enlarged section shows the track at a highway crossing with two passings below the bridge. The width of the bridge is 45 m. Each marker refers to a GPS-based state update.

The track includes also several passings below bridges. These passings are also enlarged in both figures with additional markers at every epoch with a GPS-based state update. The inertial measurements are used to update the state vector in between two GPS updates. One can observe a continuous path despite the GNSS signal interruption and increased multipath. As some satellites are at low elevation and as signals are also reflected, a GNSS-based state update can still be performed during the first meters of driving below the bridge. Once all tracking loops have lost lock, the re-acquisition also takes some time, which explains the distance between the end of a bridge and the first GPS-based state update after the bridge.

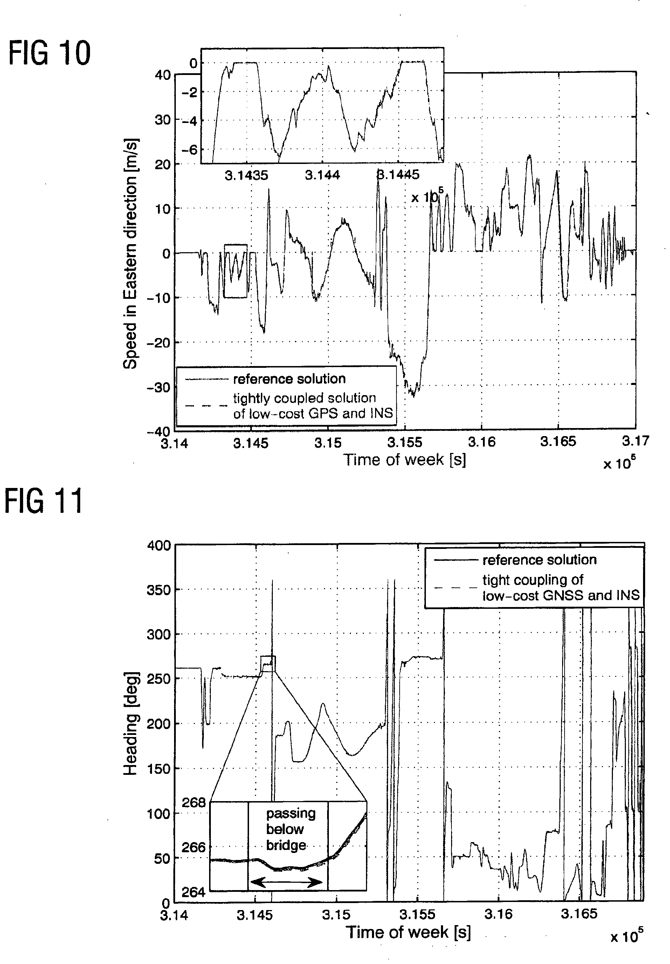

Figure 10 shows the satellite-satellite single difference code multipath estimates with a common reference satellite for the first object receiver: The delays are up to 15 m and significantly correlated over time, which indicates the need and benefit of estimating them instead of mapping them to the code noise.

The speed of the vehicle estimate in Eastern direction is given in Fig. 9. The difference between the speed estimate using low-cost GPS and INS hardware and the geodetic-grade GPS/ INS reference solution is in the order of only 0.1 m/s.

Figure 11 shows the heading of the vehicle. The heading estimate based on low-cost GPS and INS hardware closely follows the reference solution throughout the complete measurement period. The enlarged section refers to a bridge underpass. The heading estimate is continuous and the heading error remains less than 0.2° despite the GNSS signal interruption.

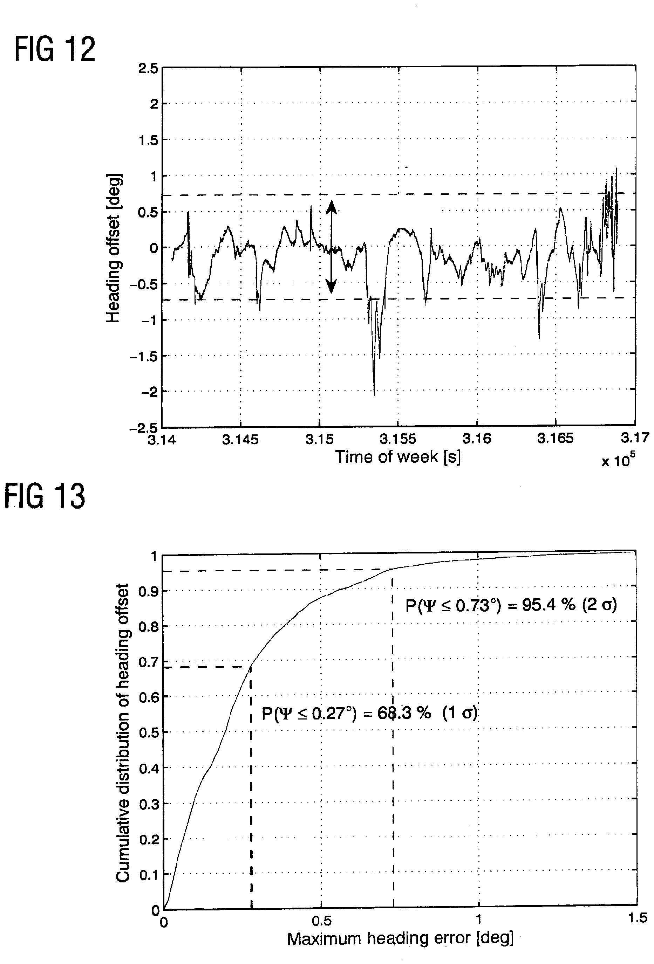

Figure 12 depicts the difference between the heading estimate obtained from the low-cost GPS/ INS hardware and the reference solution. The heading offset is less than 0.5° for most of the time.

Figure 13 shows the cumulative distribution of the heading error including all passages below bridges. The heading error is less than 0.27° in 68.3% (1σ) and less than 0.73° in 95.4% (2σ) of all epochs.

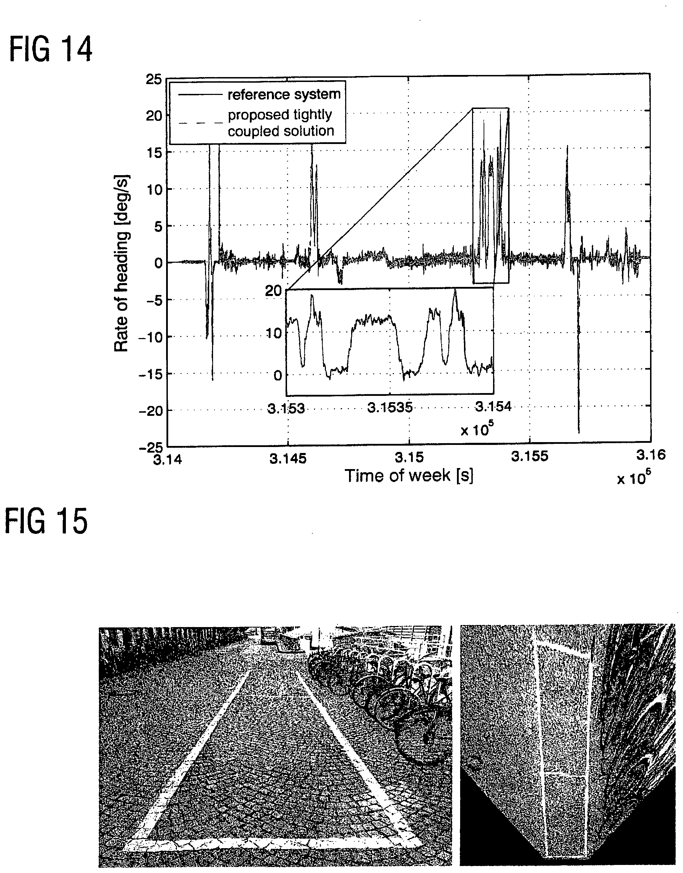

Figure 14 compares the rate of heading estimate using low-cost GPS/ INS hardware with the rate of heading of the reference system. The accuracy is in the order of 0.1°/s. A similar performance was observed for the rate of pitch.

Figure 15 shows the gyroscope bias for the rate of heading measurement. The bias varies by up to $(0.01°/s)/60s \approx 2 \cdot 10^{-6}$ rad/s$^2$ during the measurement period. For the bias of the rate of pitch measurement, we observed a similar order of magnitude.

## 7. Improving convergence of PPP with image-based a priori information

Images can significantly improve the convergence speed of the Kalman filter and, thus, of the precise point positioning solution. The camera images are first projected from the camera-perspective into the perspective of some geo-referenced reference images. This projection depends on the mounting point of the camera on the kinematic object and on the geometry of the kinematic object. Subsequently, characteristic features (e.g. edges of a parking lot) are extracted from the projected camera images. The same features are also extracted from the geo-referenced images. The features of the projected and geo-referenced images are correlated and the maximum correlation is searched. Once the correlation peak is found, the absolute position of the kinematic object is obtained from the position of the features of the geo-referenced image and of the a priori known geometry between the kinematic object and the image. The obtained absolute position information is added as an additional measurement into the tight coupling.

Figure 15 illustrates such an approach. The left image was obtained from a camera on a vehicle. The image is transformed to change the view point from the vehicle to the sky, which allows a correlation with geo-referenced satellite/aerial images.

## 8. Synchronized Acquisition of Measurements

Under open sky conditions Global Navigation Satellite Systems (GNSS) provide extremely accurate and reliable positions. But these conditions are not always met: individual signals are subject to multipath or are shadowed by buildings, terrain, or trees. In an extreme case no signals are available at all such as in tunnels. Therefore the method described herein uses also other sensors. Examples are inertial sensors, odometers, magnetometers, cameras, laser scanners and the like. As explained previously, in order to determine the position and the attitide of a moving object precisely the receivers and sensors must be accurately synchronized.

To simplify the complexity and enable modularity, a so called Sensor Fusion Interface (SFI) is proposed: it provides interfaces for a unified sensor data transmission and for the time synchronization between the sensors of a system. This time synchronization feature shall be employed for sensor fusion based Real-Time Kinematic (RTK) applications and fulfill the respective timing requirements which tolerate an error up to a few tens of $\mu$ s in most use cases.

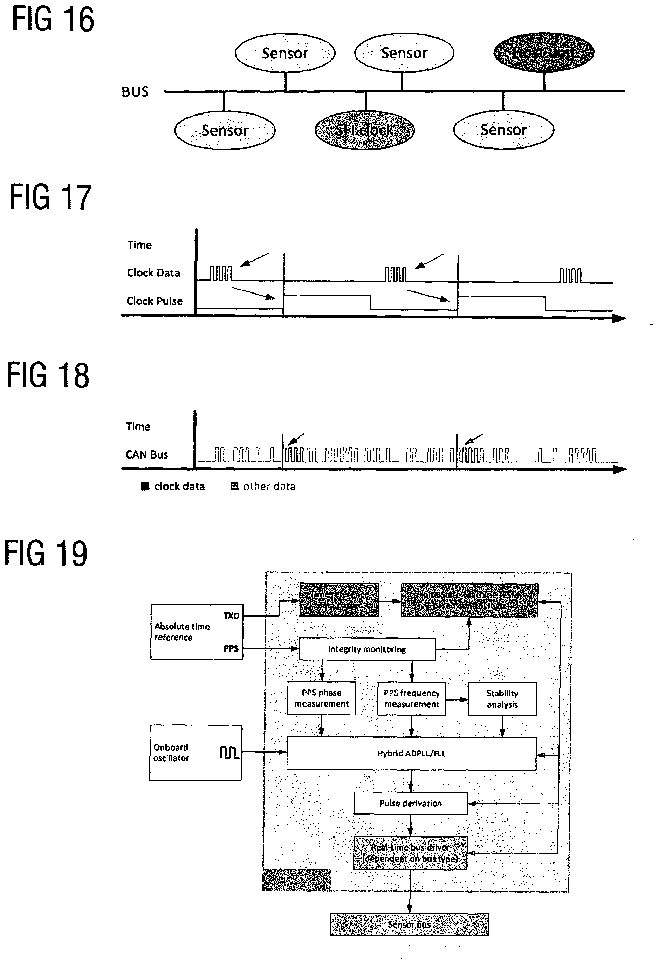

Figure 16 shows the typical structure of sensor network. The sensor network structure consists of one dedicated time synchronization device, (which we call the SFI clock) and the sensors themselves which are commonly interconnected with a bus to the processing host.

Using this bus, which can be dedicated installed or already exist, the SFI clock frequently transmits a time information to the sensors. The sensors can use this information to trigger a sample acquisition directly or alternatively to synchronize their local clocks. The period is user-configurable to match the application requirements - it is conceivable to select the greatest common divisor of the sampling rates of all sensors. The most relevant advantages of one global clock is the accurate and permanent synchronous sample acquisition on the one hand and the avoidance of costly dedicated time synchronization implementations for each sensor on the other hand. The global clock thus enables price-efficient and modular designs for sophisticated systems. The reporting path from sensor to host unit is thus not time-critical because the samples can be tagged with the time information.

The SFI clock can derives the absolute time information from a low-cost GNSS receiver as follows: The GNSS receiver determines pseudorange and carrier phase measurements at its Time of Week (TOW), which is modeled as

$$TOW_r(t) = t + \delta\tau_r(t) \tag{55}$$

with t being the time of signal reception in the GPS system time and $\delta\tau_r(t)$ being the receiver clock offset. Obviously, the latter has to be determined for a precise timing reference. As the receiver clock offset is in the order of 1 ms for low-cost GNSS receivers, we model the pseudorange explicitly at time $t + \delta\tau_r(t)$ (rather than at time t) as

$$\rho_r^k\left(t + \delta\tau_r(t)\right) = P\,\vec{x}_r\left(t + \delta\tau_r(t)\right) - \vec{x}^k\left(t + \delta\tau_r(t) - \Delta\delta\tau_r^k(t)\right)P + c\left(\delta\tau_r(t) - \delta\tau^k(t)\right)$$
$$+ I_r^k(t) + T_r^k(t) + \Delta\rho_{MP_r^k}(t) + b_r^k(t) + \eta_r^k(t) \tag{56}$$

with the receiver position $\vec{x}_r$, the receiver clock offset $\delta\tau_r(t)$, the satellite position $\vec{x}^k$, the signal propagation time $\Delta\delta\tau_r^k(t)$, the satellite clock offset $\delta\tau^k(t)$, the ionospheric delay $I_r^k(t)$, the tropospheric delay $T_r^k(t)$, the code multipath offset $\Delta\rho_{MP_r^k}$, the code bias $b_r^k$ and the code noise $\eta_r^k$. The pseudoranges of K visible satellites are modeled in matrix-vector notation as

$$\begin{pmatrix} \tilde{\rho}_r^1(t + \delta\tau_r(t)) \\ \vdots \\ \tilde{\rho}_r^1(t + \delta\tau_r(t)) \end{pmatrix} = H\begin{pmatrix} \vec{x}_r(t + \delta\tau_r(t)) \\ c\delta\tau_r(t) \end{pmatrix} + \begin{pmatrix} \eta_r^1(\delta\tau_r(t)) \\ \vdots \\ \eta_r^K(\delta\tau_r(t)) \end{pmatrix} \tag{57}$$

with

$$\begin{pmatrix} \tilde{\rho}_r^1(t + \delta\tau_r(t)) \\ \vdots \\ \tilde{\rho}_r^K(t + \delta\tau_r(t)) \end{pmatrix} = \begin{pmatrix} \rho_r^1(t + \delta\tau_r(t)) + \vec{e}^1(t + \delta\tau_r(t)) \cdot \vec{x}^1(t + \delta\tau_r(t)) + c\delta\tau^1(t) \\ \vdots \\ \rho_r^K(t + \delta\tau_r(t)) + \vec{e}^K(t + \delta\tau_r(t)) \cdot \vec{x}^K(t + \delta\tau_r(t)) + c\delta\tau^K(t) \end{pmatrix} \quad (58)$$

and

$$H = \begin{pmatrix} \vec{e}^1(t + \delta\tau_r(t)) & 1 \\ \vdots & \vdots \\ \vec{e}^K(t + \delta\tau_r(t)) & 1 \end{pmatrix}. \quad (59)$$

The receiver position and clock offset are then determined by least-squares estimation as

$$\begin{pmatrix} \hat{\vec{x}}_r(t + \delta\tau_r(t)) \\ c\delta\hat{\tau}_r(t + \delta\tau_r(t)) \end{pmatrix} = \left( H^T \Sigma^{-1} H \right)^{-1} H^T \Sigma^{-1} \begin{pmatrix} \tilde{\rho}_r^1(t + \delta\tau_r(t)) \\ \vdots \\ \tilde{\rho}_r^K(t + \delta\tau_r(t)) \end{pmatrix}, \quad (60)$$

and the absolute SFI clock is obtained as

$$t = TOW_r(t) - \delta\hat{\tau}_r(t) \quad (61)$$

Additionally, the clock drift is determined from the Doppler measurements by a similar least-squares estimation. The knowledge of the clock drift enables an approximation of the clock offset even in the absence of GNSS signal reception by performing the linear prediction

$$t = TOW_r(t_0) - \delta\tau_r(t_0) - \delta\dot{\tau}_r(t_0) \cdot (t - t_0). \quad (62)$$

In the initialization phase, a GNSS-based absolute time information is not yet available such that a free-running time synchronization is performed using only the local oscillator.

Depending on each sensor implementation the provided timing signal can be used for synchronizing the local clock of the sensor or - gaining the highest timing accuracy - to trigger the sample acquisition of the sensor directly using TTL pulse information.

The global time information can be transmitted in two different ways.

If the system allows the usage of one dedicated line for the time synchronization, both a very high accuracy and a low complexity can be achieved. An existing bus or an additional data line (like a serial UART interface) transmits the digital time information and the dedicated line determines the point of time in which this time information gets valid by emitting associated pulses. An example of its communication procedure is illustrated in Figure 17. If dedicated lines for the time synchronization are employed, the time information can be transmitted with two signals: the clock data signal provides time information for the next rising edge of the clock pulse signal. This embodiment enables both direct acquisition triggering and sensor clock synchronization.

Cost-sensitive and highly-integrated application scenarios benefit from the re-usage of existing components. Thus, the SFI clock can also be utilized in a way, in which the time information is transmitted completely over existing buses or networks like Controller Area Network (= CAN) or (Industrial) Ethernet. For example, a CAN packet can be aligned to the point of time of which its payload data refers to. A respective real-time networking analysis has to be performed to obtain the resulting timing performance which might be impaired due to jitter. With knowledge of reception latency the error can be reduced to a minimum. If the bus is loaded, the transmission of the clock packet can be rejected (in this example using a so-called "one-shot" mechanism) to avoid delayed and thus erroneous clock packets. As long as the absence of timing packets is not permanent the local sensor clock should easily be able to extrapolate the time without significant timing errors.

This option can be used for sensor clock synchronization. Figure 18 illustrates an example. In this embodiment, the time information can be transmitted using a packet-oriented bus which is shared with other applications, in example a CAN bus. The first bit of the clock data packet indicates potentially with small variance the point of time whose designation is contained in the packet payload.

The timing signal can be generated in various ways:

The SFI clock can use a local time counter (i.e. an oscillator) to count the clock. As this time counter is error-prone and counts relative, an absolute time reference is advantageous to get absolute time information and to correct the clock. As common GNSS receivers provide accurate time information using a pulse-per-second (PPS) output, they can be used for this purpose. In fact also other time references like the indoor-receivable DCF77 radio reference or the Network Time Protocol (NTP) are usable, as long as the time accuracy constraints match the application. To synchronize the local oscillator to the PPS output, a phase- and frequency-locked loop (PLL/FLL) is used: the PPS signals are measured in terms of both phase and frequency information and used to align the phase of the local clock and to determine its drift. As the clock should achieve a desirable high reliability, the reference clock is monitored. The structure of a typical SFI clock is illustrated in Figure 19. Data (TXD) and pulse (PPS) information of the absolute time reference are obtained to lock the onboard oscillator to the absolute time reference. Monitoring systems such as PPS phase measurement, the PPS frequence measurement, and a stability analysis catch invalid time designations of the time reference. A Finite State Machine (FSM) may control the overall clock generation.

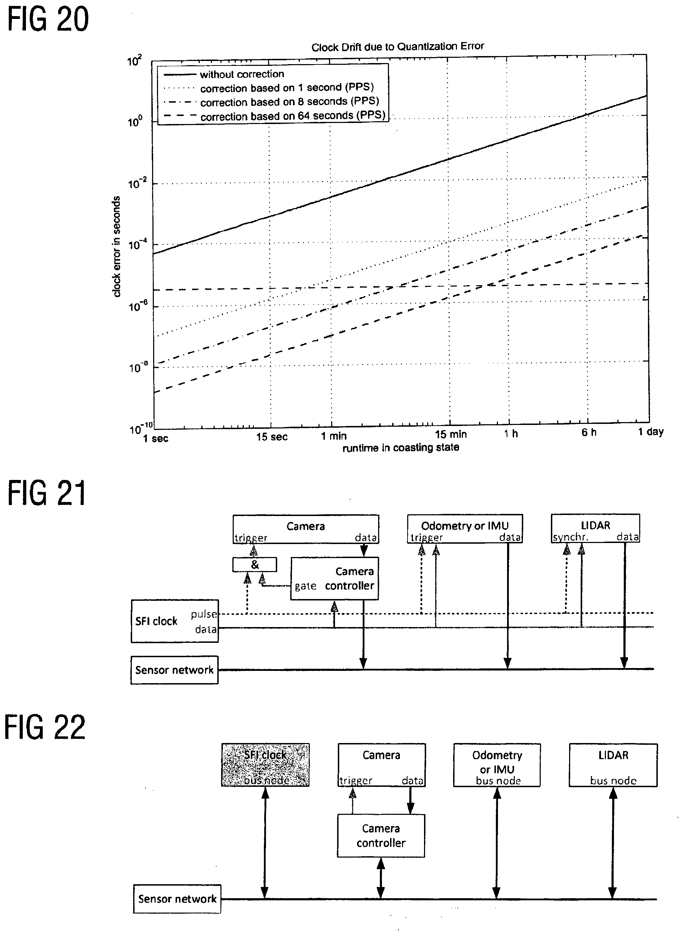

The clock precision depends on the current operating state of the time reference lock. There are mainly three states: when the SFI clock has just started and not received any (reliable) reference time yet, the clock is derived from the start-up time. Hence, the attached sensors can provide synchronized measurements even when a GNSS signal reception has been not yet available. The SFI clock is in the free-run state. As soon as the absolute reference time could be obtained, the SFI clock is locked and goes in the lock state. The reference time is permanently analyzed to reduce PPS phase (quantization) measurement noise. During the operation, the reference time might be temporarily not available (eg. open-sky conditions for GNSS receiver not met). The SFI clock then switches to the coasting state and continues to count its clock employing a clock drift correction based on the previously obtained frequency measurements. Figure 20 shows the respective timing accuracy in this state using certain correction methods. Figure 20 particularly shows a worst-case comparison of correction techniques to reduce clock drift caused by quantization error. The dashed horizontal line is the required minimum accuracy for GNSS receiver clock correction. The employed oscillator is specified for an accuracy of 50ppm.

When the reference time is available again, the clock will re-lock and jump back to the lock state in due consideration of time pulse outputs of integrity.

Without absolute synchronization of certain time periods, a clock of any stability will drift and no longer meet the timing accuracy constraints, regardless if the clock was calibrated before. Hence, the processing software has to evaluate the quality indicator of the time information of each sample and, if necessary, re-scale the time periods.

The clock data contains information about time and integrity, and is transfered to the sensors which assigns it to the respective sampling data. In order to assign the samples to their respective acquisition point of time, the clock data could carry sequence numbers, protocol-coded identifier or absolute time stamps. Absolute time stamps are chose due to ambiguity-free assignment for non real-time processing applications and to enable data loss tolerance. Each SFI clock data packet consists - next to the packet frame including synchronization and checksum - of

- the GNSS time stamp with a dedicated representation of the millisecond value to enable fast modulo-based sensor triggering,
- the unique identifier of the SFI clock in the respective network branch,
- and an indication of the current timing error.

The actual binary representation of this data is dependent on the respective transmission layer.

It should be noted that precise error estimation can be transmitted to the processing host separately.

An exemplary positioning algorithm for a mobile system might consolidate GNSS, inertial, image, odometry and LIDAR measurements. The employment of SFI with a dedicated pulse line using this example is shown in Figure 21. Sensors with an external trigger input can be directly connected to the SFI pulse line to achieve best timing accuracy. The sampling rate is here equal to the configured SFI pulse frequency. If a proper divisor of the pulse frequency as sampling rate is desired, an AND gate comparable circuit can be employed. The sensor controller can parse the incoming time information and respectively release or block the SFI clock pulses for acquisition triggering. If the sample acquisition is however triggered by an internal clock, the SFI clock can be used to synchronize or join it with the global SFI clock. In the embodiment shown in Figure 21, the sensors can synchronize their local time with the global SFI clock (LIDAR) or directly trigger the sample acquisition with prescaler (camera) or without prescaler (odometry)

The SFI clock data can certainly be transfered with the sensor network. If both SFI clock data and pulse information are to be transfered with the existing sensor network, solely a time synchronization can be performed as illustrated in Figure 22.

The synchronization of two or more low-cost GNSS sensors in one system is usually not achievable with hardware solutions due to the lack of an external clock input. The synchronization has to be done in software using a dedicated clock correction algorithm like performed in [19]. However, it is conceivable to determine the differential GNSS receiver clock error using the SFI clock. If the clock error can be determined with an accuracy of 3.3 $\mu$s, the error of the satellite position determination is less than 1cm. A dedicated clock correction algorithm is therefore not needed for RTK applications.

In the embodiment shown in Figure 7, the SFI clock broadcasts the timing information to all sensors. The sensors use this information to perform a time synchronization with their local clocks.

### 9. Advantages

The autonomous driving of vehicles requires a precise and reliable position and attitude information with high rate. The use of low-cost hardware is mandatory for this application.

In the present document, we described a method for satellite phase bias estimation and joint precise point positioning and attitude determination with low-cost GNSS receivers and an inertial sensor. We took the particularities of these receivers into account and showed that the achievable accuracies are comparable to the ones of geodetic receivers. There were two processing steps:

In the first step, satellite phase biases were determined by a network of static GNSS receivers. The absolute position of one GNSS receiver, the relative positions between this and all other GNSS receivers, the single difference code multipath delays, the double difference ambiguities and the satellite phase biases (including single difference ambiguities) were estimated with a Kalman filter. As the receiver clock offsets of low-cost GNSS receivers are in the order of 1 ms, a synchronization correction is required for each double difference to restore the integer property of the double difference ambiguities. We proposed a method that determines this correction of several meters with sub-millimeter level accuracy.

In the second step, the satellite phase bias estimates are used for kinematic PPP and attitude determination. A tight coupling of carrier phase, pseudorange, Doppler, angular rate and acceleration measurements was performed to estimate the position, velocity, acceleration, attitude, angular rates, single and double difference ambiguities, code multipath offsets and biases of the gyroscope and accelerometer. The reliability of ambiguity fixing was improved by including a priori information on the baseline length between both receivers into the tree search. A heading accuracy of 0.25° / baseline length [m] was achieved.

The SFI clock described in section 7 is an option for synchronizing the sensors of a multisensor fusion system. It is designed for low-cost RTK applications, the hardware costs are consequently in the single digit Euro level. By transmitting a global time information both direct sample acquisition triggering and sensor clock synchronization can be performed. For cost-sensitive applications existing network infrastructures can be re-used for synchronization purposes. The time accuracy constraints are fulfilled by at least one magnitude in realistic circumstances. By using the SFI clock the synchronized sample acquisition is simplified and the integration of a sophisticated software based sampling time error correction is avoided.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds or groups described in conjunction with a particular aspect, embodiment or example of the invention are to be understood to be applicable to any other aspect, embodiment or example described herein unless incompatible therewith.

Table 1: Measurement noise assumptions

| | |
|---|---|
| phase noise (undifferenced) | $\sigma_\varphi$ = {2mm...4mm} |
| code noise (undifferenced) | depending on satellite elevation $\sigma_\rho$ = {0.5m...1m} |
| Doppler noise (undifferenced) | depending on satellite elevation $\sigma_{f_D}$ = {1Hz...10Hz} |
| | depending on satellite elevation |

(continued)

| angular rates | $\sigma\{\dot{\psi},\dot{\theta},\dot{\varphi}\} = 0.001$ rad/s |
| acceleration | $\sigma\{a_x, a_y, a_z\} = 0.1$ m/s |

Table 2: Process noise assumptions

| acceleration | $\sigma_{a_x}^{(n)} = 2.5\,\text{m/s}^2$ |
| | $\sigma_{a_y}^{(n)} = 2.5\,\text{m/s}^2$ |
| | $\sigma_{a_z}^{(n)} = 0.25\,\text{m/s}^2$ |
| derivatives of angular rates | $\sigma_{\ddot{\psi}} = 25°\,/\text{s}^2$, $\sigma_{\ddot{\theta}} = 25°/\text{s}^2$ |
| single difference ambiguities | $\sigma_N = 0.25$ cycles |
| code multipath | $\{2m,...,5m\}$ |
| gyroscope biases | depending on satellite elevation $\sigma_{b_{\dot{\psi}}} = 2\cdot10^{-7}$ rad/s |
| | $\sigma_{b_{\dot{\theta}}} = 2.10^{-7}$ rad/s |
| accelerometer biases | $\sigma_{b_{a_i}^{(b)}} = 10^{-9}\,m/\text{s}^2$ , $i \in \{x, y, z\}$ |

**References:**

[1] M. Grewal, L. Weill and A. Andrews, Global Positioning Systems, Inertial Navigation and Integration, Wiley, 2007.

[2] J. Wendel, Integrierte Navigationssysteme. Sensordatenfusion, GPS und Inertiale Navigation. Oldenbourg Verlag, 346 pp., 2007.

[3] M. Gabor and R. Nerem, Satellite - Satellite Single-Difference Phase Bias Calibration As Applied to Ambiguity Resolution, Navigation, Journal of the Institute of Navigation, Vol. 49, No. 4, pp. 223-247, Winter 2002-2003.

[4] D. Laurichesse, F. Mercier, J. Berthias, P. Broca and L. Cerri, Integer Ambiguity Resolution on Undifferenced GPS Phase Measurements and its Application to PPP and Satellite Precise Orbit Determination, Navigation, Journal of the Institute of Navigation, Vol. 56, Nr. 2, Summer 2009.

[5] B. Zhang, P. Teunissen and D. Odijk, A Novel Un-differenced PPP-RTK Concept, The Journal of Navigation, Vol. 64, pp. 180-191, 2011.

[6] D. Odijk, P. Teunissen and B. Zhang, PPP-RTK Platform performance based on single-frequency GPS data, Proc. of 32nd Asian Conference on Remote Sensing (ACRS), 6 p, 2011.

[7] D. Odijk, P. Teunissen and A. Khodabandeh, Single-Frequency PPP-RTK: Theory and Experimental Results, Earth on the Edge: Science for a Sustainable Planet, Editors: Rizos, Chris and Willis, Pascal, Springer Berlin Heidelberg, Vol. 139, pp. 571-578, 2014.

[8] Z. Wen, P. Henkel and C. Günther, Precise Point Positioning with Code Multipath Estimation, Proc. of 55-th IEEE Symposium ELMAR, pp. 345-348, Zadar, Croatia, Sep. 2013.

[9] P. Teunissen, Integer least-squares theory for the GNSS compass, Journal of Geodesy, Vol. 84, pp. 433-447, 2010.

[10] P. Teunissen, The LAMBDA method for the GNSS compass, Artificial Satellites, Vol. 41, Nr. 3, 2006.

[11] P. Henkel and C. Günther, Reliable Integer Ambiguity Resolution: Multi-Frequency Code Carrier Linear Combinations and A Priori Knowledge of Statistical Attitude, Navigation, Vol. 59, Nr. 1, pp. 61-75, 2012.

[12] R. Brown and P. Hwang, Introduction to Random Signals and Applied Kalman filtering, John Wiley, 4th edition, 2012.

[13] P. Henkel, P. Berthold and J. Kiam, Calibration of Magnetic Field Sensors with two mass-market GNSS receivers, Proc. of 11-th IEEE Workshop on Positioning, Navigation and Communication (WPNC), Dresden, Germany, 2014.

[14] P. Henkel and N. Oku, Cycle slip detection and correction for heading determination with low-cost GPS/ INS receivers, Proc. of VIII Hotine Marussi Symposium, IAG, Rome, Italy, Jun. 2013.

[15] P. Groves, Principles of GNSS, Inertial, and Multisensor Integrated Navigation Systems, 2nd edition, Artech House, 2013.

[16] P. Henkel, P. Jurkowski and C. Günther, Differential Integer Ambiguity Resolution with Gaussian a priori knowledge and Kalman filtering, Proc. of 24th ION GNSS, Portland, USA, pp. 3881-3888, Sep. 2011.

[17] P. Teunissen, The least-squares ambiguity decorrelation adjustment: a method for fast GPS ambiguity estimation, J. of Geodesy, vol. 70, pp. 65-82, 1995.

[18] P. Henkel and J. Kiam, Maximum A Posteriori Probability Estimation of Integer Ambiguities and Baseline, Proc. of 55-th IEEE Symp. ELMAR, pp. 353-356, Zadar, Croatia, Sep. 2013.

[19] Juan Manuel Cárdenas and Patrick Henkel, *Method for determining the baseline between two receivers,* European Patent Application No. EP 12 199 772.0

## Claims

1. A method, performed by an apparatus comprising a processing unit (11), a kinematic sensor (19) and at least two object receivers (6, 7), for determining the position and attitude of a moving object (5), the method comprising:

   - performing code and phase measurements on satellite signals (3) of a global satellite navigation system at a single carrier frequency by means of the at least two object receivers (6, 7) associated with the moving object (5),
   - determining, by means of the processing unit (11), the current position of the moving object (5) based on the code and phase measurements using satellite-satellite single differences of the code and phase measurements and using an estimation of at least one absolute phase ambiguity,

   **characterized in tha** the method further comprises:

   - retrieving, by the processing unit (11), satellite biases of satellite-satellite single differences of the phase from a network (4) of static network receivers (15 - 17),
   - performing Doppler measurements on the satellite signal (3) by at least one of the object receivers (6, 7),
   - using the kinematic sensor (19) associated with the moving object (5) for generating kinematic measurements on the motion of the moving object (5),
   - correcting, by the processing unit, for satellite biases the satellite-satellite single differences of the phase measurements, and
   - within the processing unit (11), synchronising and using the satellite-satellite single differences of the code measurements, the satellite-satellite single differences of the corrected phase measurement, satellite-satellite differences of the Doppler measurements and the kinematic measurements as an input for a recursive state estimator, that estimates the position and attitude of the moving object (5).

2. The method according to Claim 1,
   wherein the satellite biases have been determined by a network (4) of static network receivers (15 - 17), which perform code and phase measurements on the satellite signals (3) of the global satellite navigation system (1) at a single carrier frequency, and wherein the code and phase measurements are corrected for the movement of the satellite (2) within the time of the difference between the clock offsets of the static network receivers (15 - 17) and by using the corrected code measurements and the corrected phase measurements as input for a network recursive state estimator, that estimates the satellite biases.

3. The method according to Claim 2,
wherein the phase measurements are corrected for cycle slips using triple difference phase measurements of the static network receivers (15 - 17).

4. The method according to Claim 2 or 3,
wherein the state vector of the network recursive state estimator comprises the absolute position of a selected static network receiver (15), the relative positions between the selected static network receiver (15) and all other static network receivers (16, 17), the absolute phase ambiguities of the selected static network receiver (15) lumped with the satellite biases, the double difference phase ambiguities with respect to other static network receivers (16, 17), the code multipaths of the static network receivers (15 - 17), the vertical ionospheric delays and the rates of vertical ionospheric delays.

5. The method according to Claim 4,
wherein the real valued double difference phase ambiguities are fixed and wherein all other parameters are re-adjusted and wherein the satellite biases are determined as difference between the real-valued absolute phase ambiguities and their nearest integer numbers.

6. The method according to any one of claims 1 to 5,
wherein, before the object (5) starts moving, the object receivers (6, 7) and the kinematic sensor (19) are synchronized, biases of the kinematic sensor (19) are determined and a recursive state estimator is used to estimate the relative position between the object receivers (6, 7) as well as code multipaths of the object receivers (6, 7) and double difference integer ambiguities of phase measurements performed by the object receivers (6, 7).

7. The method according to any one of Claims 1 to 6,
wherein the position and the attitude of the object (5) is determined taking into account a priori information on the respective length of the baseline between the object receivers (6, 7).

8. The method according to any one of Claims 1 to 7,
wherein the kinematic sensor (19) provides measurements on accelerations as well as measurements on angular rates of the baseline (8) between a selected object receiver (6) and another object receiver (7).

9. The method according to any one of Claims 1 to 8,
wherein the state vector of the recursive state estimator comprises a first set updated by the code, phase and Doppler measurements performed by the object receivers (6, 7) and a second set updated by the kinematic measurements.

10. The method according to Claim 8 and 9,
wherein the first set comprises the position and the velocity of the selected object receiver (6), an absolute phase ambiguity of the selected object receiver (6), a double difference phase ambiguity with respect to the selected object receiver (6) and the other object receiver (7) as well as code multipath offsets of code measurements that are performed on the satellite signals by the object receivers (6, 7).

11. The method according to Claims 9 or 10,
wherein the second set comprises the position, the velocity and the acceleration of the selected object receiver (6) as well as attitude angles of the baseline (8), the angular rates, and biases of the kinematic measurements.

12. The method according to any one of Claims 1 to 11,
wherein the synchronization between the phase and code measurements and the kinematic measurements is performed by using a synchronization signal derived from a local clock contained in one of the object receivers (6, 7).

13. The method according to claim 12,
wherein the synchronization signal is transmitted via a data bus or a separate line for the synchronization signal.

14. The method according to claim 12 or 13,
wherein the synchronization signal is a free running synchronization signal while the object receiver (6, 7), that generates the synchronization signal, receives less than four satellite signals, whereas the synchronization signal is locked to a time signal that is determined by least-squares estimation using pseudorange measurements from at least four satellites.

15. Apparatus for determining the position of a moving object comprising:

- object receivers (6, 7) for measuring signals of a satellite navigation system,
- a kinematic sensor (19) for performing measurements on the motion of the object, and
- a processing unit (11) that is connected to the object receivers (6, 7) and to the kinematic sensor(19)

**characterized in that** the apparatus is arranged for performing a method according to any one of Claims 1 to 14.

**Patentansprüche**

1. Verfahren zur Bestimmung der Position und Lage eines sich bewegenden Objekts (5), wobei das Verfahren umfasst:

- Bestimmung von Code- und Phasenmesswerten von Satellitensignalen (3) eines globalen Satellitennavigationssystems auf einer einzigen Trägerfrequenz mit mindestens zwei Empfängern (6,7), die dem bewegten Objekt (5) zugeordnet sind,
- Bestimmung der aktuellen Position des bewegten Objekts (5) basierend auf den Code- und Phasenmesswerten unter Verwendung von zwischen zwei Satelliten differenzierten Code- und Phasenmesswerten und unter Verwendung einer Schätzung von mindestens einer absoluten Phasenmehrdeutigkeit,

**dadurch gekennzeichnet, dass**

- Satelliten-Biases von zwischen zwei Satelliten differenzierten Phasenmesswerten von einem Netzwerk (4) von Empfängern (15 - 17) bezogen werden,
- Doppler-Messwerte an den Satellitensignalen (3) von mindestens einem der Empfänger (6, 7) erfasst werden,
- ein dem bewegten Objekt (5) zugeordneter Bewegungssensor (19) zur Erfassung von Messwerten der Bewegung des bewegten Objekts (5) verwendet wird,
- die zwischen zwei Satelliten differenzierten Phasenmesswerte korrigiert werden durch Anwendung der Satelliten-Biases, und
- die zwischen zwei Satelliten differenzierten Codemesswerte, die zwischen zwei Satelliten differenzierten und korrigierten Phasenmesswerte, die zwischen zwei Satelliten differenzierten Doppler-Messwerte und die Messwerte des Bewegungssensors synchronisiert werden und von einem rekursiven Zustandsschätzer verwendet werden, der die Position und Lage des sich bewegenden Objekts (5) bestimmt.

2. Verfahren nach Anspruch 1, wobei die Satelliten-Biases von einem Netzwerk (4) von Empfängern (15 - 17) bestimmt wurden, die Code- und Phasenmesswerte an den Satellitensignalen (3) des globalen Satellitennavigationssystems (1) auf einer einzigen Trägerfrequenz aufnehmen, und wobei die Code- und Phasenmesswerte korrigiert werden um die Bewegungen der Empfänger des Netzwerks (15 - 17) und der Satelliten (2) innerhalb der Zeit der relativen Uhrenfehler zwischen den Empfängern des Netzwerks (15-17), und die korrigierten Code- und Phasenmesswerte von einem rekursiven Zustandsschätzer verwendet werden, um die Satelliten-Biases zu schätzen.

3. Verfahren nach Anspruch 2, wobei die Phasenmesswerte unter Verwendung von dreifach-differenzierten Phasenmesswerten der Empfänger des Netzwerks (15 - 17) korrigiert werden von Phasensprüngen.

4. Verfahren nach Anspruch 2 oder 3, wobei der Zustandsvektor des rekursiven Zustandsschätzers die absolute Position eines ausgewählten Empfängers (15) des Netzwerks, die relativen Positionen zwischen dem ausgewählten Empfänger (15) des Netzwerks und allen anderen Empfängern (16 , 17) des Netzwerks, die absoluten Phasenmehrdeutigkeiten des ausgewählten Empfängers (15) des Netzwerks verbunden mit den Satelliten-Biases, die Doppeldifferenz-Phasenmehrdeutigkeiten der anderen Empfänger (16, 17) des Netzwerks, die Code-Mehrwegefehler der Empfänger (15 - 17) des Netzwerks, die ionosphärischen Verzögerungen in vertikaler Richtung, und die Raten der ionosphärischen Verzögerungen in vertikaler Richtung beinhaltet.

**5.** Verfahren nach Anspruch 4,
wobei die reellwertigen Doppeldifferenz-Phasenmehrdeutigkeiten auf ganze Zahlen fixiert werden und alle anderen Parameter des Zustandsvektors angepasst werden und wobei die Satelliten-Biases als Differenz zwischen den reellwertigen absoluten Phasenmehrdeutigkeiten und den nächstliegenden ganzen Zahlen bestimmt werden.

**6.** Verfahren nach einem der Ansprüche 1 bis 5,
wobei, bevor sich das Objekt (5) zu bewegen beginnt, die Empfänger (6, 7) und der Bewegungssensor (19) synchronisiert werden, systematische Versätze der Messwerte des Bewegungssensors (19) bestimmt werden, und ein rekursiver Zustandsschätzer verwendet wird, um die relative Position zwischen den Empfängern (6, 7) des Objekts sowie Code-Mehrwegefehler der Empfänger (6, 7) des Objekts (5) und ganzzahlige Doppeldifferenz-Mehrdeutigkeiten der von den Empfängern (6, 7) des Objekts (5) aufgenommenen Phasenmesswerten zu schätzen.

**7.** Verfahren nach einem der Ansprüche 1 bis 6,
wobei die Position und die Lage des Objekts (5) unter Berücksichtigung von a-priori-Informationen über den Abstand zwischen den Empfängern (6, 7) des Objekts bestimmt werden.

**8.** Verfahren nach einem der Ansprüche 1 bis 7,
wobei der Bewegungssensor (19) Messwerte von Beschleunigungen sowie Messwerte von Drehraten des Objekts (5) bereitstellt.

**9.** Verfahren nach einem der Ansprüche 1 bis 8,
wobei der Zustandsvektor des rekursiven Zustandsschätzers eine erste Teilmenge von Parametern beinhaltet, die mit den von den Empfängern (6, 7) des Objekts (5) aufgenommenen Code-, Phasen- und Doppler-Messwerten aktualisiert wird, und eine zweite Teilmenge von Parametern beinhaltet, die mit den Messwerten des Bewegungssensors (19) aktualisiert wird.

**10.** Verfahren nach Anspruch 8 und 9,
wobei die erste Teilmenge von Parametern die Position und die Geschwindigkeit des ausgewählten Empfängers (6) des Objekts (5), eine absolute Phasenmehrdeutigkeit des ausgewählten Empfängers (6) des Objekts (5), eine Doppeldifferenz-Phasenmehrdeutigkeit bezüglich des ausgewählten Empfängers (6) des Objekts (5) und des anderen Empfängers (7) des Objekts (5), sowie Code-Mehrwegefehler von Code-Messwerten, die von den Empfängern (6, 7) des Objekts (5) durchgeführt werden, beinhaltet.

**11.** Verfahren nach Anspruch 9 oder 10,
wobei die zweite Teilmenge von Parametern die Position, die Geschwindigkeit und die Beschleunigung des ausgewählten Empfängers (6) des Objekts (5), die Lagewinkel des entlang der Basislinie (8) ausgerichteten Objekts (5), die Drehraten und die systematischen Versätze des Messwerte des Bewegungssensors beinhaltet.

**12.** Verfahren nach einem der Ansprüche 1 bis 11,
wobei die Synchronisation zwischen den Phasen- und Codemesswerten und den Messwerten des Bewegungssensors durchgeführt wird, indem ein Synchronisationssignal verwendet wird, das von einem lokalen Taktgeber abgeleitet wird, der in einem der Empfänger (6, 7) des Objekts (5) enthalten ist.

**13.** Verfahren nach Anspruch 12, wobei das Synchronisationssignal über einen Datenbus oder eine separate Leitung für das Synchronisationssignal übertragen wird.

**14.** Verfahren nach Anspruch 12 oder 13,
wobei das Synchronisationssignal ein frei laufendes Zeitsignal ist in der Zeit, während der die Empfänger (6, 7) des Objekts, die das Synchronisationssignal erzeugen, weniger als vier Satellitensignale empfangen, und andernfalls ein Zeitsignal ist, das aus den Code-Messwerten von mindestens vier Satellitensignalen durch Minimierung des kleinsten Fehlerquadrats bestimmt wird.

**15.** Vorrichtung zur Bestimmung der Position eines sich bewegenden Objekts (5), umfassend:

- Empfänger (6, 7) des Objekts (5) zur Bestimmung von Messwerten von Signalen eines Satellitennavigationssystems,
- einen Bewegungssensor (19) zur Bestimmung von Messwerten der Bewegung des Objekts (5), und
- eine Verarbeitungseinheit (11), die mit den Empfängern (6, 7) des Objekts (5) und dem Bewegungssensor (19) verbunden ist

**dadurch gekennzeichnet, dass** die Verarbeitungseinheit (11) zum Durchführen eines Verfahrens nach einem der Ansprüche 1 bis 14 eingerichtet ist.

## Revendications

1. Procédé pour déterminer la position et l'attitude d'un objet mobile (5), le procédé comprenant:

   - effectuer des mesures de code et de phase sur des signaux satellites (3) d'un système global de navigation par satellite à une seule fréquence porteuse au moyen d'au moins deux récepteurs d'objet (6, 7) associés à l'objet mobile (5),
   - déterminer la position actuelle de l'objet mobile (5) sur la base des mesures de code et de phase en utilisant des différences simples satellite-satellite des mesures de code et de phase et en utilisant une estimation d'au moins une ambiguïté de phase absolue,

   **caractérisé en ce que**

   - les biais satellites des différences simples satellite-satellite des mesures de phase sont récupérés à partir d'un réseau (4) de récepteurs du réseau (15 - 17),
   - des mesures Doppler sont effectuées sur le signal satellite (3) par au moins un des récepteurs objets (6, 7),
   - un capteur cinématique (19) associé au mobile (5) est utilisé pour générer des mesures cinématiques sur le mouvement du mobile (5),
   - les différences simples satellite-satellite des mesures de phase sont corrigées des biais satellites, et
   - les différences simples satellite-satellite des mesures de code, les différences simples satellite-satellite de la mesure de phase corrigée, les différences satellite-satellite des mesures Doppler et les mesures cinématiques sont synchronisées et utilisées comme entrée pour un estimateur d'état récursif, que estime la position et l'attitude de l'objet mobile (5).

2. Procédé selon la revendication 1,
   dans lequel les polarisations satellites ont été déterminées par un réseau (4) de récepteurs de réseau (15 - 17), qui effectuent des mesures de code et de phase sur les signaux satellites (3) du système mondial de navigation par satellite (1) à une fréquence porteuse unique, et dans lequel les mesures de code et de phase sont corrigées du mouvement des récepteurs du réseau (15 - 17) et du satellite (2) dans le temps de la différence entre les décalages d'horloge des récepteurs du réseau (15 - 17) et en utilisant les mesures de code corrigées et les mesures de phase corrigées en entrée d'un estimateur d'état récursif de réseau, qui estime les biais du satellite.

3. Procédé selon la revendication 2,
   dans lequel les mesures de phase sont corrigées pour les glissements de cycle en utilisant des mesures de phase de triple différence des récepteurs de réseau (15 - 17).

4. Procédé selon la revendication 2 ou 3,
   dans lequel le vecteur d'état de l'estimateur d'état récursif de réseau comprend la position absolue d'un récepteur de réseau sélectionné (15), les positions relatives entre le récepteur de réseau sélectionné (15) et tous les autres récepteurs de réseau (16 , 17), les ambiguïtés de phase absolues du récepteur réseau sélectionné (15) regroupées avec les biais satellites, les ambiguïtés de phase en double différence par rapport aux autres récepteurs réseau (16, 17), les multitrajets de code des récepteurs réseau (15 - 17), les retards ionosphériques verticaux et les taux de retards ionosphériques verticaux.

5. Procédé selon la revendication 4,
   dans lequel les ambiguïtés de phase à double différence à valeur réelle sont fixées et dans lequel tous les autres paramètres sont réajustés et dans lequel les biais du satellite sont déterminés comme différence entre les ambiguïtés de phase absolue à valeur réelle et leurs nombres entiers les plus proches.

6. Procédé selon l'une quelconque des revendications 1 à 5,
   dans lequel, avant que l'objet (5) ne commence à se déplacer, les récepteurs d'objet (6, 7) et le capteur cinématique (19) sont synchronisés, les polarisations du capteur cinématique (19) sont déterminé et un estimateur d'état récursif est utilisé pour estimer la position relative entre les récepteurs objets (6, 7) ainsi que les multitrajets de code des récepteurs objets (6, 7) et les ambiguïtés entières à double différence des mesures de phase effectuées par les récepteurs objets (6, 7).

7. Procédé selon l'une quelconque des revendications 1 à 6,
dans lequel la position et l'attitude de l'objet (5) sont déterminées en tenant compte d'informations a priori sur la longueur respective de la ligne de base entre les récepteurs d'objet (6, 7).

8. Procédé selon l'une quelconque des revendications 1 à 7,
dans lequel le capteur cinématique (19) fournit des mesures d'accélérations ainsi que des mesures de vitesses angulaires de la ligne de base (8) entre un récepteur objet sélectionné (6) et un autre récepteur objet (7).

9. Procédé selon l'une quelconque des revendications 1 à 8,
dans lequel le vecteur d'état de l'estimateur d'état récursif comprend un premier ensemble mis à jour par les mesures de code, de phase et Doppler effectuées par les récepteurs objets (6, 7) et un deuxième ensemble mis à jour par les mesures cinématiques.

10. Procédé selon les revendications 8 et 9,
dans lequel le premier ensemble comprend la position et la vitesse du récepteur objet sélectionné (6), une ambiguïté de phase absolue du récepteur objet sélectionné (6), une ambiguïté de phase à double différence par rapport à la récepteur d'objet sélectionné (6) et l'autre récepteur d'objet (7) ainsi que des décalages de trajets multiples de code des mesures de code qui sont effectuées sur les signaux satellites par les récepteurs d'objet (6, 7).

11. Procédé selon les revendications 9 ou 10,
dans lequel le deuxième ensemble comprend la position, la vitesse et l'accélération du récepteur d'objet sélectionné (6) ainsi que les angles d'attitude de la ligne de base (8), les vitesses angulaires et les biais du mesures cinématiques.

12. Procédé selon l'une quelconque des revendications 1 à 11,
dans lequel la synchronisation entre les mesures de phase et de code et les mesures cinématiques est effectuée en utilisant un signal de synchronisation issu d'une horloge locale contenue dans l'un des récepteurs objets (6, 7).

13. Procédé selon la revendication 12,
dans lequel le signal de synchronisation est transmis via un bus de données ou une ligne séparée pour le signal de synchronisation.

14. Procédé selon la revendication 12 ou 13,
dans lequel le signal de synchronisation est un signal de synchronisation libre tandis que le récepteur objet (6, 7), qui génère le signal de synchronisation, reçoit moins de quatre signaux satellites, tandis que le signal de synchronisation est verrouillé sur un signal temporel déterminé par l'estimation des moindres carrés à l'aide de mesures de pseudodistance d'au moins quatre satellites.

15. Appareil pour déterminer la position d'un objet en mouvement comprenant:

- des récepteurs d'objets (6, 7) pour mesurer les signaux d'un système de navigation par satellite,
- un capteur cinématique (19) pour effectuer des mesures sur le mouvement de l'objet, et
- une unité de traitement (11) qui est reliée aux récepteurs objets (6, 7) et au capteur cinématique (19)

**caractérisé en ce que** l'unité de traitement (11) est agencée pour exécuter un procédé selon l'une quelconque des revendications 1 à 14.

## FIG 1

# FIG 2

# FIG 3

## FIG 4

GPS measurements      INS measurements

*static conditions*

| Synchronization of GPS receivers | | Determination of gyroscope biases |

Kalman filter based estimation of baseline and double difference integer ambiguities

*kinematic conditions*

Synchronization of INS with GPS by correlation of heading estimates

time

tight coupling

## FIG 5

GPS meas.      IMU meas.

Sync and CSC

$t_n, z_n(s_n^z(2))$

$t_n, z_n(s_n^z(1))$

GPS based update of state vector

IMU based update of state vector

$t_n, x_n(s_n^x(1))$      $t_n, x_n(s_n^x(2))$

## FIG 6

## FIG 7

FIG 8

FIG 9

## FIG 10

## FIG 11

FIG 12

FIG 13

FIG 14

FIG 15

## FIG 16

BUS

Sensor    Sensor    Host unit

Sensor    SFI clock    Sensor

## FIG 17

Time

Clock Data

Clock Pulse

## FIG 18

Time

CAN Bus

■ clock data    ▨ other data

## FIG 19

Absolute time reference

TXD

PPS

Onboard oscillator

Time reference data latch

Finite state machine (FSM) based control logic

Integrity monitoring

PPS phase measurement

PPS frequency measurement

Stability analysis

Hybrid ADPLL/FLL

Pulse derivation

Real-time bus driver (dependent on bus type)

Sensor bus

## FIG 20

Clock Drift due to Quantization Error

## FIG 21

## FIG 22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2624013 A1
- EP 12199772 A

**Non-patent literature cited in the description**

- **M. GREWAL ; L. WEILL ; A. ANDREWS.** Global Positioning Systems, Inertial Navigation and Integration. Wiley, 2007
- **J. WENDEL.** Integrierte Navigationssysteme. Sensordatenfusion, GPS und Inertiale Navigation. Oldenbourg Verlag, 2007, 346
- **M. GABOR ; R. NEREM.** Satellite - Satellite Single-Difference Phase Bias Calibration As Applied to Ambiguity Resolution. *Navigation, Journal of the Institute of Navigation,* 2002, vol. 49 (4), 223-247
- **D. LAURICHESSE ; F. MERCIER ; J. BERTHIAS ; P. BROCA ; L. CERRI.** Integer Ambiguity Resolution on Undifferenced GPS Phase Measurements and its Application to PPP and Satellite Precise Orbit Determination. *Navigation, Journal of the Institute of Navigation,* 2009, vol. 56 (2
- **B. ZHANG ; P. TEUNISSEN ; D. ODIJK.** A Novel Un-differenced PPP-RTK Concept. *The Journal of Navigation,* 2011, vol. 64, 180-191
- **D. ODIJK ; P. TEUNISSEN ; B. ZHANG.** PPP-RTK Platform performance based on single-frequency GPS data. *Proc. of 32nd Asian Conference on Remote Sensing (ACRS),* 2011, 6
- Single-Frequency PPP-RTK: Theory and Experimental Results. **D. ODIJK ; P. TEUNISSEN ; A. KHODABANDEH.** Earth on the Edge: Science for a Sustainable Planet. Springer Berlin Heidelberg, 2014, vol. 139, 571-578
- **Z. WEN ; P. HENKEL ; C. GÜNTHER.** Precise Point Positioning with Code Multipath Estimation. *Proc. of 55-th IEEE Symposium ELMAR,* September 2013, 345-348
- **P. TEUNISSEN.** Integer least-squares theory for the GNSS compass. *Journal of Geodesy,* 2010, vol. 84, 433-447
- **P. TEUNISSEN.** The LAMBDA method for the GNSS compass. *Artificial Satellites,* 2006, vol. 41 (3
- **P. HENKEL ; C. GÜNTHER.** Reliable Integer Ambiguity Resolution: Multi-Frequency Code Carrier Linear Combinations and A Priori Knowledge of Statistical Attitude. *Navigation,* 2012, vol. 59 (1), 61-75
- **R. BROWN ; P. HWANG.** Introduction to Random Signals and Applied Kalman filtering. John Wiley, 2012
- **P. HENKEL ; P. BERTHOLD ; J. KIAM.** Calibration of Magnetic Field Sensors with two mass-market GNSS receivers. *Proc. of 11-th IEEE Workshop on Positioning, Navigation and Communication (WPNC),* 2014
- Cycle slip detection and correction for heading determination with low-cost GPS/ INS receivers. **P. HENKEL ; N. OKU.** Proc. of VIII Hotine Marussi Symposium. IAG, June 2013
- **P. GROVES.** Principles of GNSS, Inertial, and Multisensor Integrated Navigation Systems. Artech House, 2013
- **P. HENKEL ; P. JURKOWSKI ; C. GÜNTHER.** Differential Integer Ambiguity Resolution with Gaussian a priori knowledge and Kalman filtering. *Proc. of 24th ION GNSS,* September 2011, 3881-3888
- **P. TEUNISSEN.** The least-squares ambiguity decorrelation adjustment: a method for fast GPS ambiguity estimation. *J. of Geodesy,* 1995, vol. 70, 65-82
- **P. HENKEL ; J. KIAM.** Maximum A Posteriori Probability Estimation of Integer Ambiguities and Baseline. *Proc. of 55-th IEEE Symp. ELMAR,* September 2013, 353-356